(19) Europäisches Patentamt
European Patent Office
Office européen des brevets

(11) **EP 4 534 496 A1**

(12) **EUROPEAN PATENT APPLICATION**
published in accordance with Art. 153(4) EPC

(43) Date of publication:
**09.04.2025 Bulletin 2025/15**

(21) Application number: **23845251.0**

(22) Date of filing: **30.06.2023**

(51) International Patent Classification (IPC):
**C03C 21/00** $^{(2006.01)}$

(52) Cooperative Patent Classification (CPC):
**C03C 3/095; C03C 3/097; C03C 21/00**

(86) International application number:
**PCT/CN2023/105334**

(87) International publication number:
**WO 2024/022038 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.07.2022 CN 202210887801**

(71) Applicants:
• **Chongqing Aureavia Hi-Tech Glass Co., Ltd.**
**Chongqing 400714 (CN)**
• **Huawei Technologies Co., Ltd.**
**Shenzhen, Guangdong 518129 (CN)**

(72) Inventors:
• **HUA, Wenqiong**
**Chongqing 400714 (CN)**
• **QIN, Wencheng**
**Chongqing 400714 (CN)**
• **YUAN, Xiaobin**
**Chongqing 400714 (CN)**
• **HUANG, Hao**
**Chongqing 400714 (CN)**
• **ZHU, Guangxiang**
**Shenzhen, Guangdong 518129 (CN)**
• **CHEN, Jiejie**
**Shenzhen, Guangdong 518129 (CN)**

(74) Representative: **Locas, Davide et al**
**Cantaluppi & Partners S.r.l.**
**Piazzetta Cappellato Pedrocchi, 18**
**35122 Padova (IT)**

(54) **CHEMICALLY STRENGTHENED GLASS CONTAINING Y2O3 AND USE THEREOF**

(57) The present invention belongs to the field of glass technology, and specifically relates to a chemically strengthened glass containing $Y_2O_3$, and a use thereof. The chemically strengthened glass comprises a compressive stress layer and a tensile stress layer, and the chemically strengthened glass satisfies: surface CS≥900MPa; (surface CS/1000) $\times$0.7+(CT_LD/40000)$\times$0.3>1.00, CT_LD being the tensile stress linear density in MPa/mm; Young's modulus>85GPa. The chemically strengthened glass of the present invention has a specific stress structure, excellent stress characteristics and high intrinsic strength, and thus has excellent scratch resistance.

FIG. 10

**Description**

**CROSS-REFERENCE TO RELATED APPLICATION**

The present invention claims the priority to the Chinese patent application with the filing No. CN202210887801.9 filed with the Chinese Patent Office on July 26, 2022, and entitled "CHEMICALLY STRENGTHENED GLASS CONTAINING $Y_2O_3$ AND USE THEREOF", the contents of which are incorporated herein by reference in entirety.

**TECHNICAL FIELD**

The present invention belongs to the technical field of glass, and specifically relates to chemically strengthened glass containing $Y_2O_3$ and use thereof.

**BACKGROUND ART**

With the popularization of electronic devices with a touch display apparatus, such as smartphones, tablet computers, electronic watches, and intelligent wearables, the era of intelligent mobility of human beings is started. In such a trend, requirements on performance of a display screen are also rising, and particularly requirements on abrasion resistance and scratching resistance of a touch display screen are also increasingly higher.

In long-term use of a screen of a smartphone, a vehicle-mounted display screen or the like, it is easy to leave scratches due to abrasion or scratching, and if there are too many scratches or a too large scratch area, it will bring about discomfort in perception and affect a visual effect. Moreover, because scratches scatter incident light, if there are too many scratches or a too large scratch area, transparency and optical performance also will be greatly affected, for example, transmittance, refractivity, etc. will be reduced, and particularly haze of glass will be increased. For example, if too many scratches or a too large scratch area is produced on glass of a rear camera lens of a mobile phone in long-term use, haze of a lens surface will be too high, and photographic imaging capability will be lowered down. Besides, a scratch may also serve as a starting point of a crack of touch screen glass, and lose stability and propagates under the action of impact, collision, or the like, to cause a decrease in impact strength of the glass, increase possibility of failure, and lead to a high cost of subsequent repair or replacement.

For cover glass materials on current smart phones, iteration products of developers are usually developed with improved drop resistance as highlight, but tend to neglect scratching resistance to which customers pay more attention during use, so that the scratching resistance of current cover glass products hardly meets customer and market demands.

Intelligent wearable samples (such as watches and bracelets), display devices in an extreme environment, automobile intelligent control systems, etc. are all fixed in position, and do not have very high requirements on drop performance, but since they are often in contact with hard objects, pressed, etc., they require higher scratching resistance and abrasion resistance, so as to maintain good optical performance thereof.

Therefore, in order to meet market requirements, developing a glass product having excellent scratching resistance is a technical problem to be solved urgently in the art.

**SUMMARY**

The present invention provides chemically strengthened glass containing $Y_2O_3$, where the chemically strengthened glass contains a compressive stress layer and a tensile stress layer, and where the chemically strengthened glass satisfies:

$$\text{surface CS} \geq 900 \text{ MPa};$$

(surface CS/1000)$\times$0.7+(CT_LD/40000)$\times$0.3>1.00, where CT_LD is linear density of center tension, in MPa/mm; and
Young's modulus>85 GPa.

Optionally, when a surface of the chemically strengthened glass is scratched, under a load of 50 g, by a Mohs hardness pen with a hardness scale 8 secured at an angle of 45 °C through an automatic pencil hardness meter, so as to form a scratch with a length of 4.6 mm, an area of the scratch is less than 0.6 mm$^2$.

Optionally, when a surface of the chemically strengthened glass is scratched, under a load of 200 g, by a Mohs hardness pen with a hardness scale 8 secured at an angle of 45 °C through an automatic pencil hardness meter, so as to form a scratch with a length of 4.6 mm, an area of the scratch is less than 1.5 mm$^2$.

Optionally, when a surface of the chemically strengthened glass is scratched, under a load not greater than 200 g, by a Mohs hardness pen with a hardness scale 8 secured at an angle of 45 °C through an automatic pencil hardness meter, so as to form a scratch with a length of 4.6 mm, the scratch does not produce a phenomenon of edge chipping, or an area of edge chipping produced by the scratch does not exceed 5% of a total area of the scratch.

Optionally, the surface CS of the chemically strengthened glass is ≥1,000 MPa. Optionally, the surface CS of the chemically strengthened glass is 1,000 MPa-1,600 MPa.

Optionally, the chemically strengthened glass satisfies: 2.00≥ (surface CS/1000)×0.7+(CT_LD/40000)×0.3>1.00.

Optionally, CT_LD of the chemically strengthened glass is ≥40,000 MPa/mm. Optionally, the CT_LD of the chemically strengthened glass is 40,000 MPa/mm-66,000 MPa/mm.

Optionally, the Young's modulus of the chemically strengthened glass is ≥90 GPa. Optionally, the Young's modulus of the chemically strengthened glass is 90 GPa-110 GPa.

Optionally, the chemically strengthened glass further satisfies: 0<DOL_1≤0.014 t, where t is a thickness of the chemically strengthened glass, and DOL_1 is a depth of the compressive stress layer formed through sodium-potassium exchange for any surface of the chemically strengthened glass, in μm.

Optionally, the chemically strengthened glass further satisfies: 0.14 t≤DOL_0≤0.25 t, where t is a thickness of the chemically strengthened glass, and DOL_0 is a depth of the compressive stress layer, in μm.

Optionally, Vickers hardness of the chemically strengthened glass is ≥650 kgf/mm$^2$. Optionally, the Vickers hardness of the chemically strengthened glass is 670 kgf/mm$^2$-750 kgf/mm$^2$.

Optionally, a bifurcation threshold of the chemically strengthened glass is 40,000 MPa/mm-60,000 MPa/mm, and CT_LD≤1.10×bifurcation threshold.

Optionally, in terms of molar percentages of oxides, the tensile stress layer of the chemically strengthened glass includes following composition: $SiO_2$ in a content of 50.0%-80.0%, $Al_2O_3$ in a content of 3.0%-20.0%, $Y_2O_3$ in a content of 0.5%-10.0%, $La_2O_3$ in a content of 0-10.0%, MgO in a content of 0-15.0%, $Na_2O$ in a content of 1.0%-10.0%, and $Li_2O$ in a content of 1.0%-20.0%.

Optionally, in terms of molar percentages of oxides, the tensile stress layer of the chemically strengthened glass includes following composition: $SiO_2$ in a content of 60.0%-70.0%, $Al_2O_3$ in a content of 8.0%-15.0%, $Y_2O_3$ in a content of 1.5%-6.0%, $La_2O_3$ in a content of 0%-2.0%, MgO in a content of 1.0%-7.5%, $Na_2O$ in a content of 3.0%-6.0%, and $Li_2O$ in a content of 8.0%-12.0%, $ZrO_2$ in a content of 0-10%, $P_2O_5$ in a content of 0-8%, and SrO in a content of 0-10%.

Optionally, the composition of the tensile stress layer of the chemically strengthened glass satisfies:
in terms of contents of oxides represented by molar percentage, calculating a value of G by following formula, G≥1250,
G=$SiO_2$×7.5+$Al_2O_3$×24+$B_2O_3$×2-$P_2O_5$×6+MgO×31.5+SrO×20+$Y_2O_3$×66+$La_2O_3$×57+$Na_2O$×10.8+$Li_2O$×25+$K_2O$×7+ZnO×6.1+Zr $O_2$×27.

Optionally, in terms of contents of oxides represented by molar percentage, the composition of the tensile stress layer of the chemically strengthened glass satisfies: $Na_2O$×($3Y_2O_3$+$Al_2O_3$)>80.

Optionally, in terms of contents of oxides represented by molar percentage, the composition of the tensile stress layer of the chemically strengthened glass satisfies: $Li_2O$+$Na_2O$+$K_2O$≤17.0, and $Li_2O$/($Na_2O$+$K_2O$)>1.

Optionally, the composition of the tensile stress layer of the chemically strengthened glass satisfies:
in terms of contents of oxides represented by molar percentage, calculating a value of M calculated by following formula, M≥12, M=$Li_2O$×(1.4×$Y_2O_3$+1.1×$La_2O_3$+$Al_2O_3$)/(MgO×0.3+$Li_2O$×0.3+$K_2O$+$Na_2O$).

The present invention further provides substrate glass for preparing the chemically strengthened glass as described above, where in terms of molar percentages of oxides, the substrate glass includes following composition: $SiO_2$ in a content of 50.0%-80.0%, $Al_2O_3$ in a content of 3.0%-20.0%, $Y_2O_3$ in a content of 0.5%-10.0%, $La_2O_3$ in a content of 0-10.0%, MgO in a content of 0-15.0%, $Na_2O$ in a content of 1.0%-10.0%, and $Li_2O$ in a content of 1.0%-20.0%;

and in terms of contents of oxides represented by molar percentage, the composition of the substrate glass satisfies following conditions:
calculating a value of G based on following formula, G≥1250, G=$SiO_2$×7.5+$Al_2O_3$×24+$B_2O_3$×2-$P_2O_5$×6+MgO×31.5+SrO×20+$Y_2O_3$×66+$La_2O_3$×57+$Na_2O$×10.8+$Li_2O$×25+$K_2O$×7+ZnO×6.1+Zr $O_2$×27; and

$$Na_2O \times (3Y_2O_3 + Al_2O_3) > 80.$$

Optionally in terms of molar percentages of oxides, the substrate glass includes following composition: $SiO_2$ in a content of 60.0%-70.0%, $Al_2O_3$ in a content of 8.0%-15.0%, $Y_2O_3$ in a content of 1.5%-6.0%, $La_2O_3$ in a content of 0%-2.0%, MgO in a content of 1.0%-7.5%, $Na_2O$ in a content of 3.0%-6.0%, and $Li_2O$ in a content of 8.0%-12.0%.

Optionally, in terms of molar percentages of oxides, the substrate glass further includes following composition:

$ZrO_2$ in a content of 0-10%, $P_2O_5$ in a content of 0-8%, and SrO in a content of 0-10%.

Optionally, in terms of contents of oxides represented by molar percentage, the composition of the substrate glass further satisfies following conditions:

$Li_2O+Na_2O+K_2O \leq 17.0$, and $Li_2O/(Na_2O+K_2O)>1$; and/or
calculating a value of M based on following formula, $M \geq 12$,

$$M=Li_2O \times (1.4 \times Y_2O_3+1.1 \times La_2O_3+Al_2O_3)/(MgO \times 0.3+Li_2O \times 0.3+K_2O+Na_2O).$$

Optionally, Young's modulus of the substrate glass is greater than 85 Gpa. Optionally, the Young's modulus of the substrate glass is 90 GPa-110 GPa.

Optionally, Vickers hardness of the substrate glass is $\geq 620$ kgf/mm$^2$. Optionally, the Vickers hardness of the substrate glass is 630 kgf/mm$^2$-750 kgf/mm$^2$.

Optionally, a bifurcation threshold of the substrate glass is 40,000 MPa/mm-60,000 MPa/mm.

The present invention further provides a glass device, where the glass device is made from the chemically strengthened glass or the substrate glass.

The present invention further provides an electronic apparatus, including a cover, where the cover includes the chemically strengthened glass.

Optionally, the electronic apparatus includes at least one of a mobile phone, a display device, a tablet computer, an electronic watch, a smart wearable, and a TV.

**BRIEF DESCRIPTION OF DRAWINGS**

In order to more clearly illustrate technical solutions of embodiments of the present invention, drawings which need to be used in the embodiments will be briefly introduced below. It should be understood that the drawings merely shows some embodiments of the present invention, and thus should not be considered as limitation to the scope. Those ordinarily skilled in the art still could obtain other relevant drawings according to these drawings, without using any inventive efforts.

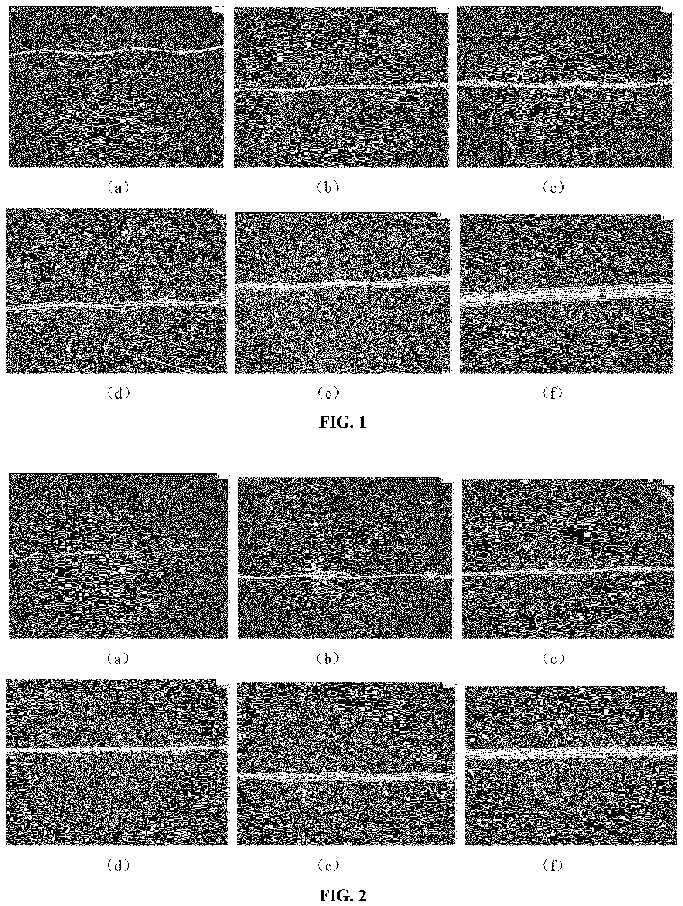

FIG. 1 show pictures of scratches of chemically strengthened glass of Comparative Example 1 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

FIG. 2 show pictures of scratches of chemically strengthened glass of Comparative Example 2 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

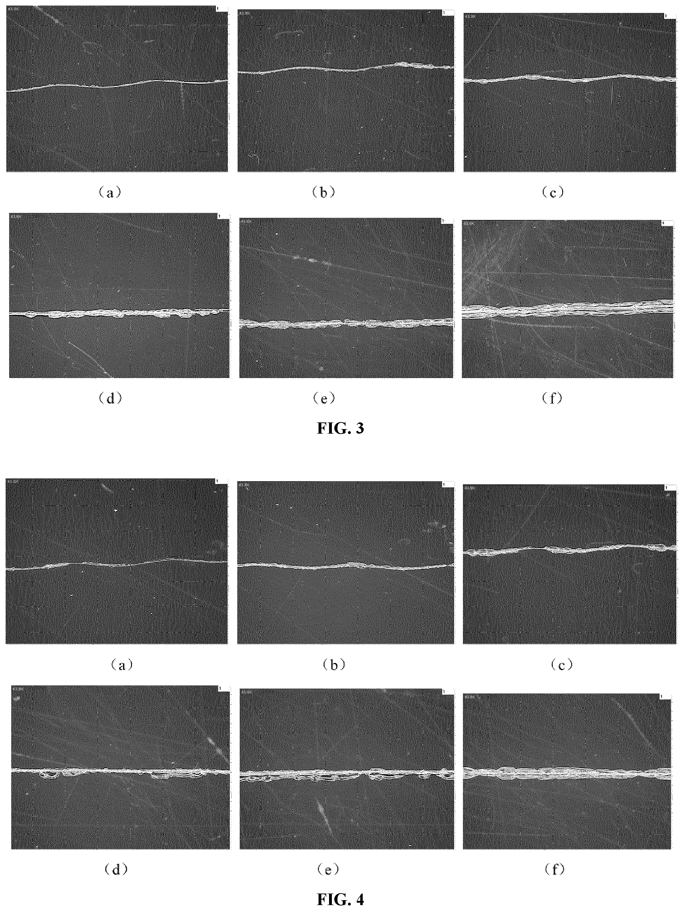

FIG. 3 show pictures of scratches of chemically strengthened glass of Comparative Example 3 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

FIG. 4 show pictures of scratches of chemically strengthened glass of Comparative Example 4 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

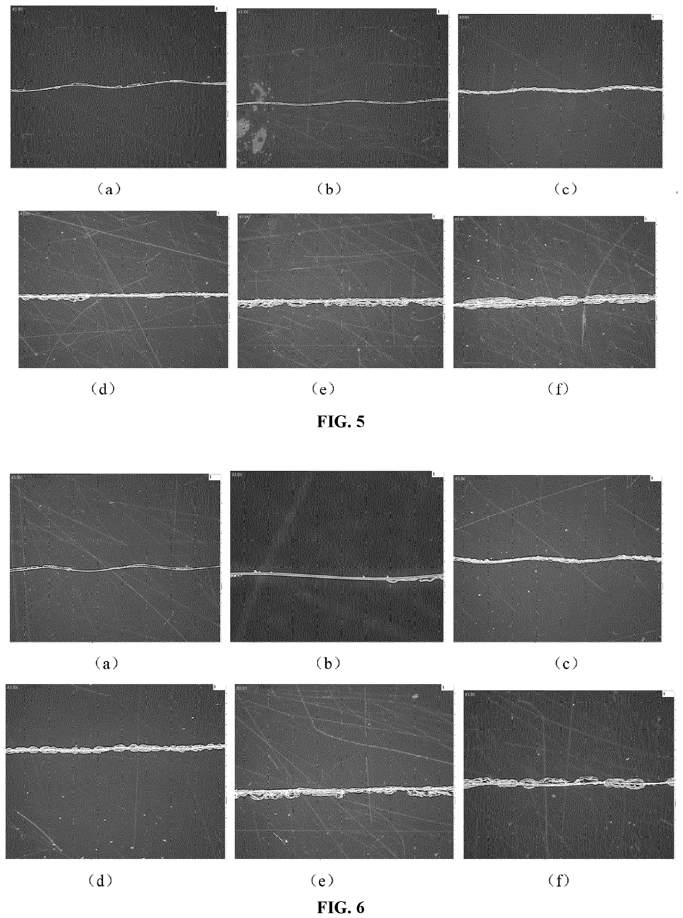

FIG. 5 show pictures of scratches of chemically strengthened glass of Comparative Example 5 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

FIG. 6 show pictures of scratches of chemically strengthened glass of Comparative Example 6 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

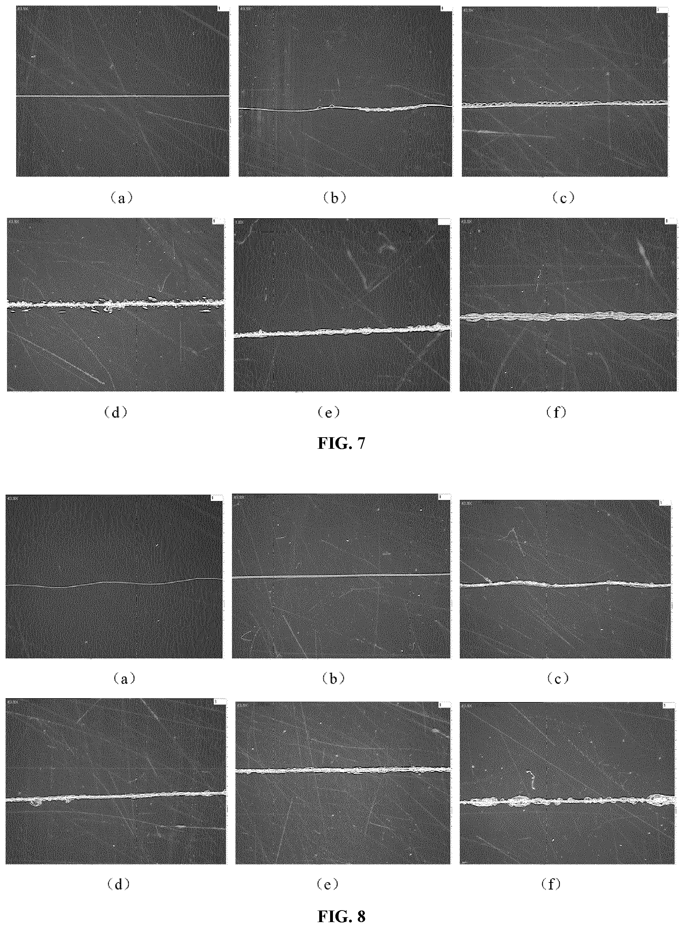

FIG. 7 show pictures of scratches of chemically strengthened glass of Comparative Example 7 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

FIG. 8 show pictures of scratches of chemically strengthened glass of Example 1 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

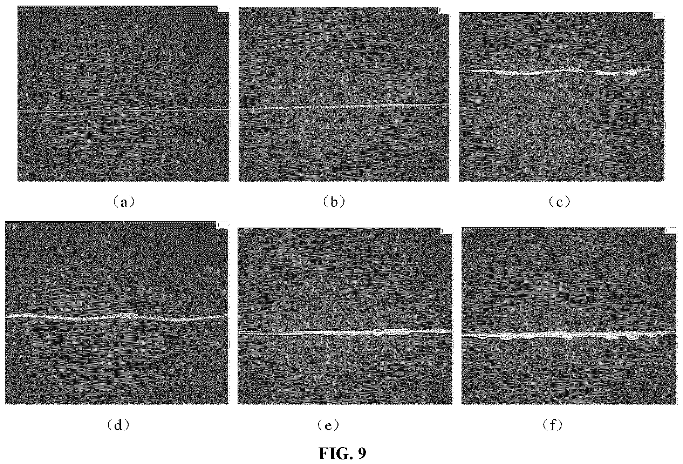

FIG. 9 show pictures of scratches of chemically strengthened glass of Example 2 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

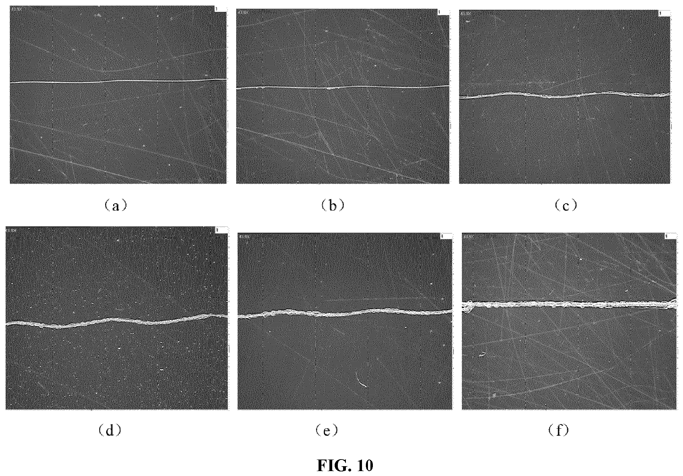

FIG. 10 show pictures of scratches of chemically strengthened glass of Example 3 under conditions of different weight measurements in a test of scratching with an automatic pencil hardness meter, where (a), (b), (c), (d), (e), and (f) are pictures of scratches magnified 43.9 times under conditions of weight measurements 0 g, 50 g, 100 g, 150 g, 200 g, and 250 g, respectively.

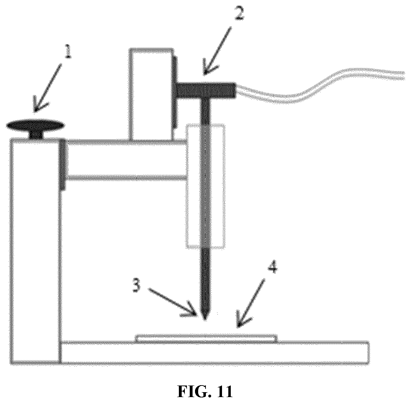

FIG. 11 is a structural schematic view of a stress release device; reference signs are as follows: 1-height adjustment guide rail, 2-activation adjustment guide rail, 3-indenter, 4-chemically strengthened glass sample.

## DETAILED DESCRIPTION OF EMBODIMENTS

Endpoints and any value of ranges disclosed herein are not limited to the precise ranges or values, and these ranges or values should be understood as encompassing values close to these ranges or values. For numerical ranges, endpoint values of various ranges can be combined with each other, endpoint values of various ranges and individual point values can be combined with each other, and individual point values can be combined with each other to obtain one or more new numerical ranges, and these numerical ranges should be construed as specifically disclosed herein.

Definitions of terms and corresponding testing methods are as follows.

As used herein, the term "chemically strengthened glass" refers to strengthened glass having been treated by a high-temperature ion-exchange process. Alkali metal ions with large ionic radii in a high-temperature salt bath replace alkali metal ions with small ionic radii in substrate glass, resulting in a volume difference between the exchanged ions, such that high to low compression stress is generated in a surface layer of the substrate glass, thus hindering and delaying propagation of minute cracks of the glass, and achieving a purpose of improving mechanical strength of the glass.

As used herein, the term "substrate glass" refers to a glass substrate material that has not been subjected to a strengthening treatment.

As used herein, the term "surface CS" refers to surface compression stress (also called as surface compressive stress). After chemical strengthening of substrate glass, alkali metal ions with smaller radii at a surface of the glass are replaced by alkali metal ions with larger radii, and due to an ion-stuffing effect of alkali metal ions with larger radii, a compression stress is generated on the glass surface, which is called as surface compression stress.

As used herein, the term "DOL_0" is depth of compressive stress layer (also called as depth of compression stress layer), which refers to a distance from any surface of chemically strengthened glass to a position close to that surface where the compression stress is zero, and is depth of a compressive stress layer formed by lithium-sodium exchange (exchange between sodium ions in salt bath/molten salt with lithium ions in glass) on any surface of the chemically strengthened glass. As the lithium ion and the sodium ion have a small volume difference, the compressive stress layer formed by lithium-sodium exchange is deep.

As used herein, the term "DOL_1" refers to depth of a compressive stress layer formed by sodium-potassium exchange (exchange between potassium ions in salt bath/molten salt and sodium ions in glass) on any surface of the chemically strengthened glass. As the potassium ion and the sodium ion have a large volume difference, the compressive stress layer formed by the sodium-potassium exchange is shallow.

Test of stress parameters:

Testing conditions for the surface CS and potassium-sodium stress exchange depth DOL_1 include: a stress instrument FSM-6000 from Japanese Orihara is used for test, and a light source wavelength is 596 nm. Before starting the test, a thickness, a refractivity, and a photoelastic coefficient of a sample to be tested are filled into a parameter table, and then the test is performed, so as to obtain values of the stress parameters of the sample to be tested.

Testing conditions for DOL_0 and CT_LD include: a stress instrument SLP-2000 from Japanese Orihara is used for test, and a light source wavelength is 518 nm. Before starting the test, a thickness, a refractivity, and a photoelastic coefficient of a sample to be tested are filled into a parameter table, an exposure period is adjusted to be 5,000 usec, and then the test is performed, so as to obtain values of the stress parameters of the sample to be tested.

In the above, glass with different components have different refractivities and photoelastic coefficients. In the present invention, the refractivity is tested by an Abbe refractometer, and the photoelastic coefficient is tested by a UNIPT ABR-10A dual-frequency laser stress instrument.

When the stress instrument is used to test the stress parameters of chemically strengthened glass product, it is necessary to drop on the stress instrument a refractive liquid dedicated thereto, then wipe a chemically strengthened glass article clean, place the same on a test path, set the instrument according to the above testing conditions, and then perform the test so as to obtain the values of the stress parameters of the chemically strengthened glass. In the above, a refractivity of the refractive liquid used by the SLP-2000 is 1.51, and a refractivity of the refractive liquid used by the FSM-6000 is 1.72.

As used herein, the term "CT_LD" refers to a linear density of center tension (tensile stress linear density). Substrate glass is disposed in a salt bath to undergo ion exchange so as to form a strengthened layer (i.e., a compressive stress layer). During the ion exchange, a tensile stress layer is formed inside the glass. The tensile stress layer has an upper boundary that is separated from an upper surface of the chemically strengthened glass by a certain distance and a lower boundary that is separated from a lower surface of the chemically strengthened glass by a certain distance. A tensile stress curve is recorded and drawn as a curve, in which a Y-axis refers to the tensile stress at a point on a line segment, which is in the tensile stress layer and is perpendicular to both the upper and lower boundaries, with upper and lower endpoints falling on the upper and lower boundaries respectively, and an X-axis refers to a distance between said point and the upper boundary. A ratio of a definite integral of the tensile stress curve to a thickness of the chemically strengthened glass is recorded as the linear density of center tension. That is, the linear density of center tension refers to a ratio of a sum of the tensile stress of chemically strengthened glass measured by the SLP-2000 stress instrument to the thickness of the glass.

As used herein, the term "edge chipping phenomenon" refers to a phenomenon such as unevenness, curling, and burrs appearing at a glass scratch.

Test of Young's modulus E: Young's modulus is measured by an acoustic method and is used for characterizing ability of glass to undergo elastic deformation due to resistance to external force. In the present invention, a method for testing the Young's modulus is the acoustic method, and an instrument model is MK7 from K-ANALYSIS INSTRUMENT TRADING Co., Ltd.

As used herein, the term "bifurcation threshold" refers to a minimum value of the linear density of center tension of chemically strengthened glass, prepared from substrate glass of a certain formula, when a glass crack generates bifurcation in an immediate fracture experiment, which is the bifurcation threshold of the chemically strengthened glass prepared from the substrate glass of the certain formula.

Immediate fracture experiment: it refers to that a central point position of a chemically strengthened glass sample is taken as a damage point, a "stress release device" is used to make the damage point generate a crack, and the crack is enabled to extend under the action of internal tensile stress, rather than producing starburst due to an excessive impact force. When the crack of the chemically strengthened glass generates bifurcation, the minimum value of linear density of center tension of the chemically strengthened glass sample is the bifurcation threshold. A number of substrate glass articles are strengthened under the same salt bath condition for different ion exchange durations, so as to render glass samples with different linear densities of center tension. According to values of linear density of center tension from low to high, the immediate fracture experiment is carried out on a plurality of glass samples obtained by the strengthening. After the immediate fracture experiment, whether a crack of the glass samples generates bifurcation is seen to find out the glass sample with crack bifurcation, and determine the minimum value of linear density of center tension (CT_LD) of these glass samples, which is the bifurcation threshold of the chemically strengthened glass prepared from the substrate glass.

The stress release device is shown in FIG. 11. The device adopts pneumatic impact, a probe adopts a Vickers diamond indenter and is fixed by a guide rail so as to ensure that the indenter vertically impacts a glass surface, and a pressure sensor is equipped so as to adjust and control magnitude of an impact force in cooperation with air pressure, so that a damage point only induces generation of hysteresis fracture or only two cracks extend rather than producing starburst, thus maximally avoiding influence of an external force on a damage state.

A specific method for testing the bifurcation threshold in the present invention is as follows: Firstly, a maximum value of linear density of center tension $CT\_LD_{max}$ that can be obtained by substrate glass with a thickness of 0.7 mm corresponding to a certain glass formula in 450 °C 100 wt% sodium nitrate salt bath is tested. Then chemically strengthened glass samples with different CT_LD are obtained by being strengthened under this salt bath condition, where the CT_LD ranges from 30,000 MPa/mm to $CT\_LD_{max}$, and increases at an amplitude of about 1,000 MPa/mm, 1,500 MPa/mm or 2,000 MPa/mm. That is, in the present invention, the substrate glass with the thickness of 0.7 mm corresponding to the glass formula to be tested is strengthened under the above salt bath condition, i.e., the 450 °C 100 wt% sodium nitrate salt bath, into chemically strengthened glass samples with CT_LD of about 30,000 MPa/mm, about 31,000 MPa/mm, about 32,000 MPa/mm, about 33,000 MPa/mm, about 34,000 MPa/mm, about 36,000 MPa/mm...respectively, and these chemically strengthened glass samples are then subjected to the fracture experiment in sequence according to CT_LD values from low to high. A central point position of each of the chemically strengthened glass samples is taken as a damage point, and the above "stress release device" is used to enable the damage point to produce a crack. The chemically strengthened glass samples in which the crack produces bifurcation are screened out, and a minimum value of CT_LD possessed by the screened chemically strengthened glass samples is taken as the bifurcation threshold of the chemically strengthened glass prepared from the substrate glass of this formula. The CT_LD value is measured by the SLP-2000 stress instrument.

The bifurcation threshold is a reference index for obtaining a safe allowable stress of the glass.

Note that when the CT_LD of the chemically strengthened glass sample has reached the $CT\_LD_{max}$, the immediate fracture experiment is performed thereon, and it is found that a crack still does not produce bifurcation, it is determined that the bifurcation threshold of the glass of this formula is greater than the $CT\_LD_{max}$ that can be obtained under this salt bath condition.

$CT\_LD_{max}$ test: a maximum value of linear density of center tension (CT_LD) that can be obtained by substrate glass chemically strengthened by ion exchange under a specific salt bath condition is the maximum value of linear density of center tension $CT\_LD_{max}$ that can be obtained by the substrate glass under this salt bath condition. The data can characterize the chemical strengthening performance or ion-exchangeable performance of the substrate glass.

During the chemical strengthening, with increase of strengthening duration, the value of linear density of center tension (CT_LD) obtained by the glass presents a trend of first increasing and then decreasing. By continuously monitoring change in the linear density of center tension in the glass during the strengthening, the maximum value of linear density of center tension $CT\_LD_{max}$ it can obtain under a specific salt bath condition can be determined.

In the present invention, a method for testing the $CT\_LD_{max}$ is as follows.

In the present invention, the 450 °C 100 wt% sodium nitrate salt bath is taken as a salt bath condition for testing the $CT\_LD_{max}$, and the stress instrument SLP_2000 is taken as a testing instrument for testing the linear density of center tension CT_LD.

A specific method is as follows: a substrate glass sample to be tested is chemically strengthened in the 450 °C 100 wt% sodium nitrate salt bath. During the strengthening, the glass sample is taken out every 0.5 h to test the CT_LD value therein. Each time the glass sample is taken out and finishes the test, the glass sample is immediately put into the salt bath to be further strengthened, and when a next testing time point is reached, the glass sample is taken out again and tested. The above testing process is repeated, and the CT_LD values of the test are recorded. When data are found to start to decrease after the measured CT_LD values increase to a certain numerical value m, the numerical value m is determined as the maximum value of linear density of center tension $CT\_LD_{max}$ that the substrate glass sample can obtain by strengthening under this salt bath condition, i.e., the 450 °C 100 wt% sodium nitrate salt bath.

A method for testing Vickers hardness is as follows: the Vickers hardness is tested by a digital display small load Vickers hardness meter with a microscopic observation device. A diamond square pyramid indenter with an apex angle of 136 °C is perpendicularly pressed into a surface of a tested sample under the action of a specified load F (a sample load in the present invention is 300 gf), and held for a specified period of time (the sample load is held for 10 s in the present invention), and then the load is removed. A surface area of indentation is calculated according to a diagonal length of the indentation, and an average pressure calculated on the surface area of the indentation is converted to the Vickers hardness. In the present invention, microscopic Vickers hardness is tested 6 times for a single sample, and an average value is taken as a microscopic Vickers hardness test result of this sample.

A method for testing fracture toughness is as follows.

On the digital display small load Vickers hardness meter, the diamond square pyramid indenter with the apex angle of 136 °C is pressed into a surface of a sample with a certain load (a sample load in the present invention is 300 gf), and held for a specified period of time (the sample load is held for 10 s in the present invention), and then the load is removed. A propagation length of a diagonal crack of indentation is measured using a microscope. In order to ensure accuracy of data, each sample is tested 6 times, and an average length of the crack is taken as a test value. The fracture toughness is calculated according to the load P (in Kg) and a propagation length D (in mm) of indentation crack, for characterizing ability of material hindering crack propagation. A calculation formula of the fracture toughness is:

$$\frac{P \times 9.81 \times 1000}{\sqrt{(3.14 \times D)^3 \times \tan\left(68 \times 3.14 / 180\right)}} \quad \text{(Formula 1)}.$$

An embodiment of the present invention provides chemically strengthened glass containing $Y_2O_3$. The chemically strengthened glass has a compressive stress layer formed by chemical strengthening on a surface, and internally has a tensile stress layer capable of realizing force balance with the compressive stress layer, that is, the chemically strengthened glass contains the compressive stress layer and the tensile stress layer. The chemically strengthened glass satisfies:

Surface CS≥900 MPa;

(surface CS/1000)×0.7+(CT_LD/40000)×0.3>1.00, where CT_LD is linear density of center tension, in MPa/mm; and
Young's modulus>85 GPa.

The inventors of the present invention find from researches that the surface CS and CT_LD have different influences on scratching resistance, and further find from researches that (surface CS/1000)×0.7+(CT_LD/40000)×0.3 can characterize influence of a degree of stress on the scratching resistance, where a higher calculated value is followed by higher scratching resistance; moreover, and when the value thereof is greater than 1, the chemically strengthened glass has excellent scratching resistance, and can meet demands of customers and markets.

Optionally, the chemically strengthened glass satisfies: 1.00< (surface CS/1000)×0.7+(CT_LD/40000)×0.3≤2.00. In this solution, a high surface stress can effectively prevent generation of crack and scratch, and weaken energy of inward propagation of minute crack; moreover, a deep low-compression stress zone can effectively prolong a distance of propagation of the crack to a tensile stress zone, and can better exert strength of a network structure of glass, and thus, cooperation of the two enables it more difficult for the crack and scratch to propagate and grow, thus ensuring that a stress structure of the chemically strengthened glass is more suitable for improving the scratching resistance thereof to a more excellent level.

In some embodiments, a value of (surface CS/1000)×0.7+(CT_LD/40000)×0.3 can be, for example, any value of 1.05, 1.10, 1.15, 1.20, 1.25, 1.30, 1.40, 1.50, 1.60, 1.70, 1.80, 1.90, 2.00, etc. and any value between adjacent values, optionally, greater than 1.15.

In some embodiments, the surface CS of the chemically strengthened glass is ≥1,000 MPa, and with the surface CS of the chemically strengthened glass being within the above range, the chemically strengthened glass has high mechanical strength and better scratching resistance. Optionally, the surface CS is, for example, 1,000 MPa-1,600 MPa, 1,100 MPa-1,650 MPa or 1,200 MPa-1,500 MPa. In an optional solution of the present invention, a larger value of the surface compressive stress is followed by higher mechanical strength of the chemically strengthened glass and better scratching resistance.

In some embodiments, the surface CS of the chemically strengthened glass can be, for example, any value of 1,000 MPa, 1,100 MPa, 1,150 MPa, 1,200 MPa, 1,210 MPa, 1,220 MPa, 1,230 MPa, 1,240 MPa, 1,250 MPa, 1,260 MPa, 1,280 MPa, 1,300 MPa, 1,400 MPa, 1,500 MPa, 1,600 MPa, etc. and any value between adjacent values; and optionally, the surface CS is ≥1,220 MPa.

In some embodiments, the CT_LD of the chemically strengthened glass is ≥40,000 MPa/mm, and with the CT_LD being within the above range, the chemically strengthened glass has excellent scratching resistance. Optionally, the CT_LD of the chemically strengthened glass is 40,000 MPa/mm-66,000 MPa/mm. In this optional solution, the tensile stress layer of the chemically strengthened glass has a suitable structure, can maximally avoid generating an effect with a destructive force of scratch to the greatest extent, and reduce possibility of edge chipping during scratching, thus significantly reducing a scratch area and improving the scratching resistance.

In some embodiments, the linear density of center tension CT_LD of the chemically strengthened glass can be, for example, 44,000 MPa/mm-65,000 MPa/mm, 45,000 MPa/mm-64,000 MPa/mm or 48,000 MPa/mm-60,000 MPa/mm, such as any value of 40,000 MPa/mm, 41,000 MPa/mm, 42,000 MPa/mm, 43,000 MPa/mm, 44,000 MPa/mm, 44,200 MPa/mm, 44,300 MPa/mm, 44,400 MPa/mm, 44,500 MPa/mm, 44,600 MPa/mm, 44,700 MPa/mm, 44,900 MPa/mm, 45,000 MPa/mm, 47,000 MPa/mm, 49,000 MPa/mm, 50,000 MPa/mm, 60,000 MPa/mm, 62,000 MPa/mm, 64,000 MPa/mm, 66,000 MPa/mm, etc. and any value between adjacent values; and optionally, the CT_LD is ≥44,200 MPa/mm.

In some embodiments, the Young's modulus of the chemically strengthened glass is ≥90 GPa, and with the Young's modulus being within the above range, it facilitates formation of a stress structure with excellent scratching resistance. Optionally, the Young's modulus is 90 GPa-110 GPa. In this optional solution, the chemically strengthened glass has high Young's modulus, which is more beneficial to cooperate with suitable ranges of the surface CS and the CT_LD, and further promotes the formation of the stress structure with excellent scratching resistance. The Young's modulus of the chemically strengthened glass can be, for example, 92 GPa-108 GPa, 94 GPa-107 GPa or 96 GPa-104 GPa, such as any value of 90 GPa, 91 GPa, 92 GPa, 93 GPa, 95 GPa, 97 GPa, 99 GPa, 100 GPa, 102 GPa, 105 GPa, 106 GPa, 108 GPa, 110 GPa, etc. and any value between adjacent values.

For the chemically strengthened glass of the present invention, when a surface of the chemically strengthened glass is scratched, under a load of 50 g, by a Mohs hardness pen with a hardness scale 8 secured at an angle of 45 °C through an automatic pencil hardness meter, so as to form a scratch with a length of 4.6 mm, an area of the scratch is less than 0.6 mm$^2$. The chemically strengthened glass of the present invention has a small scratch area and good scratching resistance.

In the present invention, the Mohs hardness pen is a pen-like test tool in which ore with a certain Mohs hardness is embedded on a metal rod, a tested object is scratched by an edge and corner of the ore at a pen tip, and hardness of the tested object is judged according to whether a scratch is left: if a scratch is left, it indicates that the hardness of the tested object is lower than that of the hardness pen, and if no scratch is left, it indicates that the hardness of the tested object is higher than that of the hardness pen. Moreover, the scratching resistance is characterized by an area of the scratch and edge chipping of the scratch. Specifically, a testing method for characterizing the scratching resistance through test with the Mohs hardness pen is as follows: through an automatic pencil hardness meter, fixing a Mohs hardness pen at an angle of 45 °C, under a predetermined load, moving a glass placement platform at a speed of 64 mm/min, where the predetermined load is a weight with a fixed weight. The Mohs hardness pen is divided into ten hardness scales, and the Mohs hardness scales of ten minerals are: 10 diamond, 9 corundum, 8 topaz, 7 quartz, 6 feldspar, 5 apatite, 4 fluorite, 3 calcite, 2 gypsum, and 1 talc in order. In order to better simulate scenes in life, scratches on a smartphone in application are mainly caused by fine dust and rough ground particles, cement ground and the like in life, where the commonest hardest substance is silicon dioxide particle, with hardness between 7 and 8; therefore, the Mohs hardness pen with the hardness scale 8 is used in the present invention. In the present invention, a surface of a glass sample is scratched by the Mohs hardness pen with the hardness scale 8 by gradually increasing the predetermined load level (0, 50, 100, 150, 200, and 250 g, i.e., common loads of mobile phones in life, the mobile phones generally having a weight of 150-200 g), until the sample shows an unacceptable damage. A scratch width, area and edge chipping of scratch on the glass surface scratched by the Mohs hardness pen are observed, so as to characterize a degree of scratching resistance of the chemically strengthened glass.

A method for calculating the area of scratch in the present invention is: calculating an area of an irregularly shaped scratch according to pixels of an irregularly shaped part corresponding to the scratch according to a known resolution of a scratch-containing picture. Specifically, the area of scratch is obtained using dedicated image processing software (such as GIMP and GNU Image Manipulation Program). An area calculation method is: pixel found from histogram/square of resolution=area of scratch. In order to ensure accuracy of data, each picture is measured three times to obtain an average value. In the above, the resolution refers to the number of pixels in a unit length, and the unit length may be in inch or centimeter.

For the chemically strengthened glass of the present invention, when the surface of the chemically strengthened glass is scratched, under a load of 200 g, by the Mohs hardness pen with the hardness scale 8 secured at the angle of 45 °C through the automatic pencil hardness meter, so as to form a scratch with a length of 4.6 mm, an area of the scratch is less than 1.5 mm$^2$. The chemically strengthened glass of the present invention has a small scratch area under a high load, and the scratching resistance still can be held at a high level.

For the chemically strengthened glass of the present invention, when the surface of the chemically strengthened glass is scratched, under the load of 50 g, by the Mohs hardness pen with the hardness scale 8 secured at the angle of 45 °C through the automatic pencil hardness meter, so as to form the scratch with a length of 4.6 mm, the haze is not more than 0.15. The chemically strengthened glass of the present invention is less affected in optical performance after having a certain scratch, and application requirements are not affected.

In the present invention, the haze has a conventional meaning in the art. A method for testing the haze includes: selecting sample glass (glass thicknesses are kept consistent, all being 0.7 mm. Surface roughness Ra of the glass after flat grinding is less than 0.04 μm), with each piece of glass having a scratch right in the middle, and placing the glass with a scratch and wiped clean right in the middle of a Konica Minolta CM-3600A optical meter (enabling the scratch to be located right in the middle of a measurement area), testing optical performance in a transmittance mode, and studying effect of the scratch on the optical performance. Testing conditions include: in a transmittance mode and an opacity/haze index mode, the measurement area is LAV (25.4 mm), D65 light source, haze: Haze (D1003-97) (A) and Haze (D1003-97) (C), and a spectral wavelength ranges from 360 nm to 740 nm. A haze value of the unscratched glass is less than 0.1.

For the chemically strengthened glass of the present invention, when the surface of the chemically strengthened glass is scratched, under the load of 200 g, by the Mohs hardness pen with the hardness scale 8 secured at the angle of 45 °C through the automatic pencil hardness meter, so as to form a scratch with the length of 4.6 mm, the haze is not more than 0.40. The chemically strengthened glass of the present invention is less affected in optical performance after having a certain scratch, and application requirements are not affected.

For the chemically strengthened glass of the present invention, when the surface of the chemically strengthened glass is scratched, under the load not greater than 200 g ($\leq$200g), by the Mohs hardness pen with the hardness scale 8 secured at the angle of 45 °C through the automatic pencil hardness meter, so as to form a scratch with the length of 4.6 mm, the scratch does not produce a phenomenon of edge chipping, or an area of edge chipping produced by the scratch does not exceed 5% of a total area of the scratch.

The inventors of the present invention find that surface scratching resistance is closely related to the surface CS. In order to ensure high surface CS, in some optional embodiments of the present invention, the chemically strengthened glass further needs to satisfy: 0<DOL_1$\leq$0.014 t, and with DOL_1 being within the above range, the chemically strengthened glass has excellent scratching resistance. Optionally, 0<DOL_1$\leq$0.010 t, where t is a thickness of the chemically strengthened glass (a thickness of the substrate glass and the thickness of the chemically strengthened glass prepared by chemically strengthening the substrate glass have a quite small difference, which almost can be neglected), and DOL_1 is a depth of a compressive stress layer formed through sodium-potassium exchange for any surface of the chemically strengthened glass. For example, when the thickness of the chemically strengthened glass is 0.7 mm, DOL_1 is $\leq$9.8 $\mu$m, and optionally DOL_1 is $\leq$7 $\mu$m. In this optional solution, the DOL_1 enables the chemically strengthened glass to form the compressive stress layer having a high surface CS, thereby further improving the scratching resistance of the chemically strengthened glass.

The inventors of the present invention find that the surface CS is mainly generated by potassium-sodium exchange. A high volume difference of potassium-sodium ion exchange enables the glass surface to obtain a high surface compressive stress. With increase of exchange duration, potassium ions continuously enter the interior to increase the DOL_1, and under the action of stress relaxation, the surface CS gradually decreases, which is manifested by increase in the DOL_1 and decrease in the surface CS, and thus controlling the DOL_1 helps to ensure the surface CS to be at a high level.

In some embodiments, the chemically strengthened glass further satisfies: 0.14 t$\leq$DOL_0$\leq$0.25 t, and with the DOL_0 being within the above range, the chemically strengthened glass has excellent drop resistance. Optionally, 0.14 t$\leq$DOL_0$\leq$0.19 t, where t is the thickness of the chemically strengthened glass, and the DOL_0 refers to the depth of the compressive stress layer, in $\mu$m. In this optional solution, the DOL_0 enables the chemically strengthened glass to have more excellent drop resistance, and can also effectively reduce the situation of edge chipping caused by scratching, and reduce a width of the edge chipping, thus reducing the area of scratch and reducing the influence on the haze.

Generally, t is in mm. The thickness of the chemically strengthened glass of the present invention is not particularly limited. For example, for application to an electronic device of a touch display device, the thickness may be 0.4-1.5 mm, for example, 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm or a numerical value within a range formed by any two numerical values above as endpoints.

In some embodiments, the Vickers hardness of the chemically strengthened glass is $\geq$650 kgf/mm$^2$. Optionally, the Vickers hardness thereof may be 670 kgf/mm$^2$-750 kgf/mm$^2$, 680 kgf/mm$^2$-740 kgf/mm$^2$ or 695 kgf/mm$^2$-725 kgf/mm$^2$. Optionally, the Vickers hardness of the chemically strengthened glass may be, for example, any value of 650 kgf/mm$^2$, 660 kgf/mm$^2$, 670 kgf/mm$^2$, 680 kgf/mm$^2$, 690 kgf/mm$^2$, 700 kgf/mm$^2$, 710 kgf/mm$^2$, 720 kgf/mm$^2$, 730 kgf/mm$^2$, 740 kgf/mm$^2$, 750 kgf/mm$^2$, etc. and any value between adjacent values.

In some embodiments, the bifurcation threshold of the chemically strengthened glass is, for example, 40,000 MPa/mm-60,000 MPa/mm, 45,000 MPa/mm-55,000 Mpa/mm or 48,000 MPa/mm-52,000 MPa/mm. Optionally, the bifurcation threshold of the chemically strengthened glass may be, for example, any value of 40,000 MPa/mm, 41,000 MPa/mm, 42,000 MPa/mm, 43,000 MPa/mm, 44,000 MPa/mm, 45,000 MPa/mm, 46,000 MPa/mm, 47,000 MPa/mm, 50,000 MPa/mm, 52,000 MPa/mm, 55,000 MPa/mm, 57,000 MPa/mm, 60,000 MPa/mm etc. and any value between adjacent values.

Optionally, CT_LD$\leq$1.10$\times$bifurcation threshold. With the CT_LD being within this range, a deep stress of the chemically strengthened glass is suitable, and an internal tensile stress is suitably controlled, which facilitates effectively avoiding the internal tensile stress and the destructive force of scratching from generating an effect, thereby effectively reducing the possibility of occurrence of edge chipping in a scratching process, thus also significantly reducing the scratch area, and remarkably improving the scratching resistance. In application fields such as mobile-phone cover plates, after the substrate glass is chemically strengthened, a higher CT_LD value is followed by stronger drop resistance thereof. However, when the CT_LD value exceeds the bifurcation threshold, with the increase of the CT_LD value, a difference between the CT_LD value and the bifurcation threshold of the glass gradually increases. When the difference between the two exceeds a certain limit, probability of generating large fragments due to breakage of the glass will be smaller, and instead, a large number of small fragments will be generated, thus causing touch control failure and display failure; moreover, there are too many small fragments, which are apt to splash and cause personal injury. In the present invention, by controlling the CT_LD value not to exceed 1.10 times of the bifurcation threshold, the obtained chemically strengthened glass can be ensured to remain as large fragments after fragmentation, can be further used, and will not fail immediately.

Optionally, 0.5$\times$bifurcation threshold <CT_LD$\leq$1.10$\times$bifurcation threshold.

In some optional embodiments of the present invention, in terms of molar percentages of oxides, the tensile stress layer of the chemically strengthened glass includes following composition: $SiO_2$ in a content of 50.0%-80.0%, $Al_2O_3$ in a content of 3.0%-20.0%, $Y_2O_3$ in a content of 0.5%-10.0%, $La_2O_3$ in a content of 0-10.0%, MgO in a content of 0-15.0%, $Na_2O$ in a content of 1.0%-10.0%, and $Li_2O$ in a content of 1.0%-20.0%. During the chemical strengthening, ions with large radii in the salt bath are exchanged with ions with small radii in the glass, so that the compressive stress layer is formed on the surface of the glass, and the tensile stress layer is formed inside the glass. Compared with the substrate glass before the strengthening, occurrence of ion exchange causes changes in the composition of the compressive stress layer, and since a depth of the ion exchange is usually less than or equal to the thickness of the compressive stress layer, the composition of the tensile stress layer inside the glass is not changed, that is, the composition of the tensile stress layer is the same as that of the substrate glass before the strengthening. In some optional embodiments of the present invention, in terms of molar percentages of oxides, the tensile stress layer of the chemically strengthened glass includes following

composition: $SiO_2$ in a content of 60.0%-70.0%, $Al_2O_3$ in a content of 8.0%-15.0%, $Y_2O_3$ in a content of 1.5%-6.0%, $La_2O_3$ in a content of 0-2.0%, optionally, 0.5%-2.0%, MgO in a content of 1.0%-7.5%, optionally 4.0%-7.0%, $Na_2O$ in a content of 3.0%-6.0%, and $Li_2O$ in a content of 8.0%-12.0%; and optionally, $ZrO_2$ in a content of 0-10%, $P_2O_5$ in a content of 0-8%, and SrO in a content of 0-10%.

In the above optional solution of specific composition of the tensile stress layer of the present invention, the chemically strengthened glass is enabled to have the preceding specific stress structure, thus being more beneficial to improve the scratching resistance thereof.

The composition of the tensile stress layer of the chemically strengthened glass of the present invention can further include or not include an oxide of other elements, as long as it is beneficial to improve the scratching resistance, where the oxide of other elements is, for example, at least one of oxides of K, Zn, Zr, B, P, and Sr.

In some embodiments, in terms of molar percentages of oxides, the composition of the tensile stress layer of the chemically strengthened glass further includes: ZnO in a content of 0-1%.

In some embodiments, in terms of molar percentages of oxides, the composition of the tensile stress layer of the chemically strengthened glass further includes: $ZrO_2$ in a content of 0-2%.

In some embodiments, in terms of molar percentages of oxides, the composition of the tensile stress layer of the chemically strengthened glass further includes: $B_2O_3$ in a content of 0-0.5%, and optionally is free of $B_2O_3$.

In some embodiments, in terms of molar percentages of oxides, the composition of the tensile stress layer of the chemically strengthened glass further includes: $P_2O_5$ in a content of 0-1.0%, optionally 0-0.5%.

In some embodiments, in terms of molar percentages of oxides, the composition of the tensile stress layer of the chemically strengthened glass further includes: SrO in a content of 0-3%.

In some embodiments, the chemically strengthened glass is free of $K_2O$.

In the present invention, functions of various constituent elements are as follows.

$Si^{4+}$ is a network former component of glass, and has effects of maintaining stability of glass and viscosity suitable for forming molten glass, and improving chemical stability of the glass. However, an excessive content of $Si^{4+}$ will cause difficulty for melting of glass; therefore, $SiO_2$ is limited to be within the above suitable range. In the present invention, the content of $SiO_2$ can be 50.0 mol%-80.0 mol%, for example, any value of 50.0 mol%, 55.0 mol%, 58.0 mol%, 60.0 mol%, 62.0 mol%, 64.0 mol%, 65.0 mol%, 67.0 mol%, 69.0 mol%, 70.0 mol%, 72.0 mol%, 75.0 mol%, 77.0 mol%, 79.0 mol%, 80.0mol%, etc. and any value between adjacent values.

$Al^{3+}$ is a network former component of glass. $Al^{3+}$ can improve chemical stability of glass, and contributes to forming a loose glass grid, so that the glass is easy to improve in strength through a chemically strengthening ion exchange process. At the same time, containing a suitable amount of $Al^{3+}$ in glass also has an effect of reducing possibility of fragmentation of the glass when being scratched or pressed by a hard object or in other cases. Moreover, an aluminum oxide tetrahedron formed by adding $Al^{3+}$ can increase an ion exchange speed and a stress effect produced per unit ion exchange. However, too much $Al^{3+}$ will cause it difficult to eliminate inherent defects such as bubbles, streaks and glass stone in the glass. Thus, $Al_2O_3$ is limited to be within the above suitable range. In the present invention, the content of $Al_2O_3$ can be 3.0 mol%-20.0 mol%, for example, any value of 3.0 mol%, 5.0 mol%, 8.0 mol%, 10.0 mol%, 12.0 mol%, 13.0 mol%, 15.0 mol%, 17.0 mol%, 18.0 mol%, 19.0 mol%, 20.0 mol%, etc. and any value between adjacent values.

$Mg^{2+}$ is a network intermediate component of glass. $Mg^{2+}$ has a strengthening effect on glass network, and meanwhile has effects of improving glass meltbility and reducing a glass softening temperature. However, too much $Mg^{2+}$ will reduce chemical strengthening performance of the glass, especially reduce the ion exchange speed. Thus, MgO is limited to be within the above suitable range. In the present invention, the content of MgO can be 0 mol%-15.0 mol%, such as 0 mol%, 1.0 mol%, 2.0 mol%, 3.0 mol%, 4.0 mol%, 5.0 mol%, 6.0 mol%, 7.0 mol%, 7.5 mol%, 8.0 mol%, 10.0 mol%, 12.0 mol%, 13.0 mol%, 14.0 mol%, 15.0 mol%, etc. and any value between adjacent values.

$Li^+$ is a main component of ion exchange, and an increase in the content of $Li^+$ is beneficial to increase an exchange amount of sodium-lithium ions, and is beneficial to increase a deep compression stress. Thus, $Li_2O$ is limited to be within the above suitable range. In the present invention, the content of $Li_2O$ can be 1.0 mol%-20.0 mol%, such as 1.0 mol%, 3.0 mol%, 5.0 mol%, 8.0 mol%, 9.0 mol%, 10.0 mol%, 11.0 mol%, 12.0 mol%, 15.0 mol%, 18.0 mol%, 20.0 mol%, etc. and any value between adjacent values.

$Na^+$ is a main component of ion exchange, and is a key exchange ion for forming a high surface compressive stress. Thus, $Na_2O$ is limited to be within the above suitable range. In the present invention, the content of $Na_2O$ can be 1.0 mol%-10.0 mol%, such as 1.0 mol%, 3.0 mol%, 4.0 mol%, 5.0 mol%, 6.0 mol%, 7.0 mol%, 8.0 mol%, 9.0 mol%, 10.0 mol%, etc. and any value between adjacent values.

It is believed that, without being bound by theory, excessive alkali metal components such as sodium and lithium will destroy silicon-oxygen bonds in the glass, destroy the network structure, and reduce intrinsic strength; therefore, a total amount of alkali metal oxides generally does not exceed 17.0 mol%, that is, a total amount of $Li_2O+Na_2O+K_2O$ does not exceed 17.0 mol%.

$La^{3+}$ is a network modifying component of glass. $La^{3+}$ can reduce high-temperature viscosity of glass, facilitate melting of glass and elimination of intrinsic defects, can remarkably increase the Young's modulus and Vickers hardness of glass, meanwhile can also improve the chemical strengthening performance of glass, can improve stress effect generated per unit ion exchange of the chemically strengthened glass, and is used for assisting $Y^{3+}$ and $Al^{3+}$ to jointly promote an ion exchange effect, so as to generate a better stress effect. Thus, $La_2O_3$ is limited to be within the above suitable range.

$Y^{3+}$ has an effect of enabling a glass structure compact, and can increase a bulk density (packing density) inside glass, manifested by an increase in glass density, thus increasing the intrinsic strength of glass. With regard to the ion exchange performance, it can improve a stress effect produced per unit ion exchange of $Na^+$, $Li^+$ and other ions during the chemical strengthening, but will reduce an exchange speed thereof. Thus, $Y_2O_3$ is limited to be within the above suitable range. In the present invention, the content of $Y_2O_3$ can be 0.5 mol%-10.0 mol%, such as 0.5 mol%, 1.0 mol%, 1.5 mol%, 2.0 mol%, 2.5 mol%, 3.0 mol%, 3.5 mol%, 4.0 mol%, 4.5 mol%, 5.0 mol%, 5.5 mol%, 6.0 mol%, 7.0 mol%, 8.0 mol%, 9.0 mol%, 10.0 mol%, etc. and any value between adjacent values.

$Sr^{2+}$ has a relatively large ionic radius, and when being in a low content, has an effect of reducing a melting temperature of glass, and can reduce a crystal-precipitation speed of glass. Therefore, the content of SrO is optionally 0-10%, optionally 0%-3%.

$B^{3+}$ is a network former component of glass. $B^{3+}$ can remarkably reduce high-temperature viscosity of a molten glass liquid, which is conducive to glass smelting. However, an excessive content of $B^{3+}$ will reduce the chemical strengthening performance of glass. $B^{3+}$ has two coordination states of $[BO_3]$ and $[BO_4]$ in glass. $[BO_4]$ is more solid than $[BO_3]$ in coordination structure, but a B-O bond therein is too short, which will severely reduce ion migration efficiency during the chemical strengthening. Therefore, the content of $B_2O_3$ is 0-0.5%.

$P^{5+}$ is a network former component of glass. A small amount of $P^{5+}$ has effects of improving meltbility of glass and reducing crystal-precipitation performance of glass. $P^{5+}$ can also modify a glass network, and has an effect of improving a chemical strengthening effect of glass. However, $P^{5+}$ is volatile in continuous production, and volatile matters fall into molten glass to cause nonuniformity of components. At the same time, $P^{5+}$-containing glass tends to generate phase separation at a low temperature of an electric melting and whole platinum continuous melting line, which is not conducive to production of glass. Moreover, double-bond asymmetric phosphorus-oxygen tetrahedron formed due to excessive $P_2O_5$ will cause a decrease in mechanical strength, especially surface hardness, and cause the glass to be vulnerable to scratching. Thus, $P_2O_5$ is limited to be within the above suitable range.

$Zr^{4+}$ is an intermediate oxide of glass, can improve chemical stability of glass, increase surface hardness of glass, and is an effective component for improving toughness of glass. Excessive $ZrO_2$ tends to cause crystallization of glass and reduction in devitrification resistance.

$Zn^{2+}$ is an intermediate oxide of glass, and can reduce low-temperature viscosity of glass and improve chemical stability and thermal stability. Excessive ZnO tends to cause phase separation in glass, and reduction in devitrification resistance.

In some embodiments, the composition of the tensile stress layer of the chemically strengthened glass satisfies: in terms of contents of oxides represented by molar percentage, calculating a value of G by following formula, $G \geq 1250$, $G = SiO_2 \times 7.5 + Al_2O_3 \times 24 + B_2O_3 \times 2 - P_2O_5 \times 6 + MgO \times 31.5 + SrO \times 20 + Y_2O_3 \times 66 + La_2O_3 \times 57 + Na_2O \times 10.8 + Li_2O \times 25 + K_2O \times 7 + ZnO \times 6.1 + Zr O_2 \times 27$.

Optionally, G is greater than 1250. With G being within the above range, the chemically strengthened glass has very high intrinsic strength, which is more beneficial to improve the scratching resistance.

In some embodiments, the G may be, for example, 1260-1600, such as any value of 1280, 1300, 1320, 1350, 1360, 1370, 1380, 1400, 1430, 1450, 1470, 1500, 1550, and 1600 or any value between adjacent point values.

In some embodiments, in terms of contents of oxides represented by molar percentage, the composition of the tensile stress layer of the chemically strengthened glass satisfies: $Na_2O \times (3Y_2O_3 + Al_2O_3) > 80$. With $Na_2O \times (3Y_2O_3 + Al_2O_3)$ being within the above range, it is more beneficial to obtain the chemically strengthened glass with a high surface CS, thus further facilitating improving the scratching resistance of the chemically strengthened glass. Optionally, $Na_2O \times (3Y_2O_3 + Al_2O_3)$ can be 81-140, such as any value of 81, 85, 90, 100, 110, 120, 126, 130, 135, 140, etc. or any value between adjacent point values. With $Na_2O \times (3Y_2O_3 + Al_2O_3)$ being within the above optional range, it is further beneficial to obtain the chemically strengthened glass with a high surface CS, thus further facilitating improving the scratching resistance of the chemically strengthened glass.

In some embodiments, in terms of contents of oxides represented by molar percentage, the composition of the tensile stress layer of the chemically strengthened glass satisfies: $Li_2O + Na_2O + K_2O \leq 17.0$, and $Li_2O/(Na_2O + K_2O) > 1$. This optional solution of the present invention can promote network structure stability of a surface compressive stress layer in the chemically strengthened glass, and a content of $Li_2O$ is greater than a sum of total content of $Na_2O$ and $K_2O$, which can give full play to an aggregation effect of lithium ions, thus being more beneficial to improve the Young's modulus of the chemically strengthened glass, and further being more conducive to enhancing the scratching resistance.

In some optional embodiments, $1 < Li_2O/(Na_2O + K_2O) \leq 4.0$.

In some embodiments, the composition of the tensile stress layer of the chemically strengthened glass satisfies:

in terms of contents of oxides represented by molar percentage, calculating a value of M calculated by following formula, M≥12,

M=Li$_2$O×(1.4×Y$_2$O$_3$+1.1×La$_2$O$_3$+Al$_2$O$_3$)/(MgO×0.3+Li$_2$O×0.3+K$_2$O+Na$_2$O). With M being within the above range, the glass can have high exchange efficiency and a high exchange amount in ion exchange, which is conducive to improving compactness of the chemically strengthened glass, thus helping to obtain the chemically strengthened glass with a high deep stress CT_LD, and further improving the scratching resistance of the chemically strengthened glass. Without being bound by theory, since Li$_2$O is a major factor in determining a sodium-lithium ion exchange capacity, and the exchange efficiency is related to compactness of glass, the inventors find from researches that Y$_2$O$_3$, La$_2$O$_3$, and Al$_2$O$_3$ can all be used to improve the compactness of glass, but have different effects, where Y$_2$O$_3$ has the greatest effect, and La$_2$O$_3$ takes the second place, followed by Al$_2$O$_3$; while free oxygen generated by alkali metals and alkaline earth metals will damage the network structure of glass and reduce the compactness; moreover, MgO, Li$_2$O, K$_2$O, and Na$_2$O also have different capabilities of providing free oxygen, where K$_2$O and Na$_2$O are more capable than MgO and Li$_2$O. Based on this, the inventors further find from researches that the above formula can express a degree of combination of exchange efficiency with exchange capacity, and a higher value of M is followed by a high level of deep stress, which is more conducive to enhancing the scratching resistance of the chemically strengthened glass.

Optionally, the M can be, for example, 12-40, such as any value of 12, 13, 14, 15, 16, 17, 18, 19, 20, 25, 30, 35, 40, etc. or any value between adjacent point values.

In some optional embodiments, 12≤M≤35.

The chemically strengthened glass of the present invention is applicable to the field of cover-plate protection for electronic devices, such as smartphones, intelligent wearables (such as smart bracelets, smart watches, and smart glasses), and display protection for pressure-resistant devices in extreme environments, and is also applicable to the field of automobiles, such as vehicle-mounted display device protection.

An embodiment of the present invention further provides a substrate glass for preparing the above chemically strengthened glass. In terms of molar percentages of oxides, the substrate glass includes following composition: SiO$_2$ in a content of 50.0%-80.0%, Al$_2$O$_3$ in a content of 3.0%-20.0%, Y$_2$O$_3$ in a content of 0.5%-10.0%, La$_2$O$_3$ in a content of 0-10.0%, MgO in a content of 0-15.0%, Na$_2$O in a content of 1.0%-10.0%, and Li$_2$O in a content of 1.0%-20.0%.

Moreover, in terms of contents of oxides represented by molar percentage, the composition of the substrate glass satisfies following conditions:

calculating the value of G based on the following formula, G≥1250,

$$G=SiO_2×7.5+Al_2O_3×24+B_2O_3×2-P_2O_5×6+MgO×31.5+SrO×20+Y_2O_3×66+La_2O_3×57+Na_2O×10.8+Li_2O×25+K_2O×7+ZnO×6.1+ZrO_2×27;$$

and

$$Na_2O×(3Y_2O_3+Al_2O_3)>80.$$

In the present invention, by enabling the above substrate glass to have the composition of specific components, it can obtain a very high surface compression stress after being subjected to the ion exchange, thus obtaining excellent surface scratching resistance.

Optionally, in terms of molar percentages of oxides, the substrate glass includes following composition: SiO$_2$ in a content of 60.0%-70.0%, Al$_2$O$_3$ in a content of 8.0%-15.0%, Y$_2$O$_3$ in a content of 1.5%-6.0%, La$_2$O$_3$ in a content of 0%-2.0%, MgO in a content of 1.0%-7.5%, Na$_2$O in a content of 3.0%-6.0%, and Li$_2$O in a content of 8.0%-12.0%.

Optionally, in terms of molar percentages of oxides, the substrate glass further includes following composition: ZrO$_2$ in a content of 0-10%, P$_2$O$_5$ in a content of 0-8%, and SrO in a content of 0-10%.

Moreover, in terms of contents of oxides represented by molar percentage, the composition of the substrate glass further satisfies following conditions:

Li$_2$O+Na$_2$O+K$_2$O≤17.0, and Li$_2$O/(Na$_2$O+K$_2$O)>1; and/or
calculating the value of M based on the following formula, M≥12,

$$M = Li_2O \times (1.4 \times Y_2O_3 + 1.1 \times La_2O_3 + Al_2O_3)/(MgO \times 0.3 + Li_2O \times 0.3 + K_2O + Na_2O).$$

Optionally, the Young's modulus of the substrate glass is greater than 85 Gpa, and is optionally 90 GPa-110 GPa.

Optionally, the Vickers hardness of the substrate glass is $\geq$620 kgf/mm$^2$, and is optionally 630 kgf/mm$^2$-750 kgf/mm$^2$.

Optionally, the bifurcation threshold of the substrate glass is 40,000 MPa/mm-60,000 MPa/mm.

The present invention provides wide optional ranges for the preparation method for the preceding chemically strengthened glass. As long as the required conditions such as the above stress structure characteristics can be satisfied, the chemically strengthened glass can be ensured to have excellent scratching resistance and wear resistance.

An embodiment of the present invention further provides a preparation method for chemically strengthened glass, which includes: performing ion exchange on substrate glass.

The present invention has no limitation on the preparation method for the substrate glass, and those skilled in the art could prepare according to the prior art, which will not be elaborated herein.

A process of ion exchange includes: firstly performing primary ion exchange in a sodium-containing molten salt, and then performing secondary ion exchange in a potassium-containing molten salt.

In the above, the sodium-containing molten salt contains 10 wt%-100 wt% sodium salt, and the potassium-containing molten salt contains 95%-100 wt% potassium salt.

It should be understood that the sodium-containing molten salt and the potassium-containing molten salt in the present invention are both composed of a sodium salt and/or a potassium salt. Optionally, the sodium salt is at least one selected from the group consisting of sodium nitrate, sodium sulfate, and sodium carbonate, and optionally is sodium nitrate. Optionally, the potassium salt is at least one selected from the group consisting of potassium nitrate, potassium sulfate, and potassium carbonate, and optionally is potassium nitrate.

Optionally, conditions for the primary ion exchange include: a temperature of 400-480 °C, optionally 430-450 °C, and duration of 1-10 h, optionally 4-6 h.

Optionally, conditions for the secondary ion exchange include: a temperature of 400-480 °C, optionally 430-450 °C, and duration of 0.5-5 h, optionally 1-3 h.

An embodiment of the present invention further provides a glass device, wherein the glass device is made from the chemically strengthened glass of the first aspect or the substrate glass of the second aspect.

An embodiment of the present invention further provides an electronic apparatus that includes a cover, wherein the cover includes the chemically strengthened glass of the first aspect.

The electronic apparatus of the present invention includes, but is not limited to, at least one of a mobile phone, a display device (such as a vehicle-mounted display device and an avionics display device), a tablet computer, an electronic watch, a smart wearable (such as a smart bracelet, a smart watch, and smart glasses), and a TV.

The inventors of the present invention find from continuous researches that the scratching resistance of glass is closely related to both glass structure and stress characteristic possessed by glass strengthening. By enabling the chemically strengthened glass to have high Young's modulus and satisfy specific stress characteristic requirements, the scratching resistance of glass can be remarkably improved.

Through the above technical solutions, the present invention provides the chemically strengthened glass having a suitably high surface CS, and (surface CS/1000)×0.7+(CT_LD/40000)×0.3 and Young's modulus respectively being at a suitable level. It has a specific stress structure, thus being beneficial to remarkably improve the scratching resistance thereof, being capable of overcoming the defect of affecting the optical performance by abrasion or scratch due to long-term use of glass, and meeting the ever increasing performance demands of the market. In the above, as generation and propagation of crack and scratch are subjected to two kinds of resistance, i.e., compressive stress layer and network structure of the glass itself, the suitably high surface stress (i.e., high surface CS) set in the present invention can prevent the generation of crack and scratch, weaken energy of inward propagation thereof, and at the same time, the stress characteristic requirements and suitable Young's modulus of the above formulas are met, so that a deep low-compression stress zone has specific network structure and stress structure, and can prolong a distance of crack propagation to the tensile stress zone, give greater play to the strength of the network architecture of glass, and thus the two make it more difficult for the crack and scratch to propagate and grow, thereby remarkably improving the scratching resistance thereof.

The chemically strengthened glass containing $Y_2O_3$ provided by the present invention has excellent stress characteristics and high intrinsic strength, further has excellent scratching resistance, and overcomes, to some extent, the defect that the scratching resistance of glass in the prior art needs to be further improved.

## Examples

The present invention will be further described in detail below in conjunction with specific examples.

Example 1

A preparation method for chemically strengthened glass was as follows.

Substrate glass was prepared according to ratios of raw materials of the substrate glass in TABLE 2.

Various raw materials above, in a total mass of 1600 g, taken according to a formula were added into a 0.4 wt% clarifying agent sodium chloride (6.4 g of NaCl), and fully mixed to render a mixture.

The mixture was placed in a platinum crucible, heated to 1650 °C in a high-temperature smelting furnace to melt for 10 h, then poured into a molding mould to be cooled and molded, cooled to 800 °C, and then annealed in an annealing furnace at 560 °C for 2,000 min. Resultant was then cooled to 500 °C in 300 min and held at the temperature for 300 min, then cooled to 400 °C in 300 min and held at the temperature for 300 min, and further cooled to 300 °C in 300 min and held at the temperature for 300 min, so as to realize gradient slow cooling. After that, resultant was cooled with the furnace to a room temperature, so as to render a glass brick. The obtained glass brick was shaped and cut by a multi-wire cutting machine, so as to render a glass sheet of 50 mm×50 mm×0.7 mm (specification dimension) in length, width and thickness. Then precision machining (CNC), thinning, and polishing were performed, so as to render a substrate glass sample to be chemically strengthened.

Vickers hardness, Young's modulus, fracture toughness, $CT\_LD_{max}$, and bifurcation threshold of the substrate glass sample were tested, and results are as shown in TABLE 2.

First strengthening was performed on the above substrate glass sample in a pure sodium salt bath, and second strengthening was performed on the glass having undergone the first strengthening in a pure potassium salt bath, so as to render chemically strengthened glass. In the above, conditions (temperature and duration) for the first strengthening, and conditions (temperature and duration) for the second strengthening are respectively as shown in TABLE 2. The Vickers hardness, surface CS, DOL_1, DOL_0, and CT_LD of the chemically strengthened glass were tested, and a value of (surface CS/1000)×0.7+(CT_LD/40000)×0.3 was calculated, with results as shown in TABLE 2.

Comparative Example 1-Comparative Example 7

They were carried out according to Example 1, but were different in that the components and strengthening process parameters in TABLE 1 were used, and others were the same as those in Example 1. Corresponding performance test was performed, and data of results are as shown in TABLE 1.

Example 2-Example 7

They were carried out according to Example 1, but were different in that the components and strengthening process parameters in TABLE 2 were used, and others were the same as those in Example 1. Corresponding performance test was performed, and data of results are as shown in TABLE 2.

Test Example

Taking the chemically strengthened glass obtained in Examples 1-3 and Comparative Examples 1-7 as examples, scratch areas and optical haze under conditions of different weight measurements were tested respectively (testing methods were as described in the above embodiments), and data of results are as shown in TABLE 3. Scratch pictures of Comparative Examples 1-7 are as shown in FIG. 1, FIG. 2, FIG. 3, FIG. 4, FIG. 5, FIG. 6, and FIG. 7, respectively; and scratch pictures of Example 1, Example 2, and Example 3 are as shown in FIG. 8, FIG. 9, and FIG. 10, respectively.

Moreover, ratios of scratch area increment to haze increment corresponding to adjacent weight measurements were calculated, and results are as shown in TABLE 4, where the ratios of the scratch area increment to the haze increment as a whole present a decreasing trend. In the above, a calculation formula of the scratch area increment in a weight measurement interval corresponding to corresponding increment is: scratch area under an adjacent heavier weight (such as 50 g) - scratch area under a lighter weight (such as 0 g). Similarly, a calculation formula of the haze increment is: haze under an adjacent heavier weight (such as 50 g) - haze under a lighter weight (such as 0 g). Thus, the ratios thereof were calculated and obtained.

TABLE 1

| Component (mol%) and Performance | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| $SiO_2$ | 66.0 | 70.0 | 64.0 | 65.9 | 62.0 | 65 | 65 |
| $Al_2O_3$ | 8.0 | 10.0 | 11.5 | 12.1 | 15.4 | 13 | 13 |
| $P_2O_5$ | 2.0 | — | — | — | 2.5 | 0.5 | 0.5 |
| $B_2O_3$ | — | 2.0 | 0.5 | 0.5 | — | — | — |
| $Y_2O_3$ | — | — | — | — | — | 3 | 3 |
| $La_2O_3$ | — | — | — | — | — | — | — |
| $MgO$ | 5.0 | 4.0 | 0.9 | 2.4 | — | 1 | 1 |
| $ZnO$ | — | — | — | — | 1.1 | — | — |
| $ZrO_2$ | 1.0 | — | 1.6 | 1.3 | — | 2 | 2 |
| $Na_2O$ | 7.0 | 3.5 | 9.2 | 5.7 | 11.3 | 5 | 5 |
| $Li_2O$ | 11.0 | 8.5 | 12.0 | 10.6 | 7.7 | 9 | 9 |
| $K_2O$ | — | 2.0 | 0.3 | 1.5 | — | — | — |
| $SrO$ | — | — | — | — | — | 1.5 | 1.5 |
| G | 1210 | 1159 | 1230 | 1233 | 1141 | 1389 | 1389 |
| $Na_2O \times (3Y_2O_3 + Al_2O_3)$ | 56 | 35 | 106 | 69 | 174 | 110 | 110 |
| $Li_2O + Na_2O + K_2O$ | 18.0 | 14.0 | 21.5 | 17.8 | 19.0 | 14 | 14 |
| $Li_2O/(Na_2O + K_2O)$ | 1.6 | 1.5 | 1.3 | 1.5 | 0.7 | 1.8 | 1.8 |
| M | 7.46 | 9.19 | 10.32 | 11.55 | 8.71 | 19.35 | 19.35 |
| Young's Modulus before Strengthening (GPa) | 79.0 | 82.5 | 82.0 | 86.0 | 80.0 | 91 | 91 |
| Vickers Hardness (before strengthening) $kgf/mm^2$ | 608 | 627 | 619 | 630 | 611 | 633 | 633 |
| Vickers Hardness (after strengthening) $kgf/mm^2$ | 653 | 664 | 660 | 665 | 640 | 665 | 675 |
| Fracture Toughness Before Strengthening ($MPa \cdot m^{1/2}$) | 1.287 | 1.301 | 0.415 | 0.391 | 1.216 | 0.341 | 0.341 |

(continued)

| Component (mol%) and Performance | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Salt Bath and Temperature of First Strengthening | 100 wt% $NaNO_3$; 430 °C | 100 wt% $NaNO_3$; 430 °C | 100 wt% $NaNO_3$; 430 °C | 100 wt% $NaNO_3$; 430 °C | 100 wt% $NaNO_3$; 430 °C | 100 wt% $NaNO_3$; 450 °C | 100 wt% $NaNO_3$; 450 °C |
| Duration of First Strengthening | 3 h | 5 h | 3h | 4h | 2h | 5 h | 3h |
| Salt Bath and Temperature of Second Strengthening | 100 wt% $KNO_3$; 430 °C | 100 wt% $KNO_3$; 430 °C | 100 wt% $KNO_3$; 430 °C | 100 wt% $KNO_3$; 430 °C | 100 wt% $KNO_3$; 430 °C | 5 wt% $NaNO_3$+95 wt% $KNO_3$; 450 °C | 100 wt% $KNO_3$; 450 °C |
| Duration of Second Strengthening | 1 h | 40 min | 40 min | 1 h | 20 min | 1 h 50 min | 2 h 30 min |
| Surface CS (MPa) | 846.2 | 868.5 | 1055.2 | 976.2 | 1082.7 | 886.552 | 1010.1 |
| DOL_1 ($\mu$m) | 6.8 | 6.0 | 6.0 | 6.1 | 9.2 | 4.8 | 6.3 |
| DOL_0 ($\mu$m) | 109.7 | 121.4 | 100.9 | 112.26 | 106.3 | 121.8 | 119.9 |
| CT_LD (MPa/mm) | 38655.3 | 40487.3 | 39655.3 | 41915.6 | 31100.4 | 40725.6 | 33745.6 |
| CT_LD$_{max}$ (MPa/mm) | 45600 | 47000 | 51000 | 53000 | 44200 | 72500 | 72500 |
| Bifurcation Threshold (MPa/mm) | 36000 | 41000 | 39000 | 40000 | 36000 | 44500 | 44500 |
| Surface CS/1000×0.7+CT_LD/40000×0.3 | 0.88 | 0.91 | 1.04 | 1.00 | 0.99 | 0.93 | 0.96 |

In the above, G=$SiO_2 \times 7.5 + Al_2O_3 \times 24 + B_2O_3 \times 2 - P_2O_5 \times 6 + MgO \times 31.5 + SrO \times 20 + Y_2O_3 \times 66 + La_2O_3 \times 57 + Na_2O \times 10.8 + Li_2O \times 25 + K_2O \times 7 + ZnO \times 6.1 + ZrO_2 \times 27$;

$$M = Li_2O \times (1.4 \times Y_2O_3 + 1.1 \times La_2O_3 + Al_2O_3)/(MgO \times 0.3 + Li_2O \times 0.3 + K_2O + Na_2O).$$

TABLE 2

| Component (mol%) and Performance | Example 1 | Example 2 | Example 3 | Example 4 | Example 5 | Example 6 | Example 7 |
|---|---|---|---|---|---|---|---|
| $SiO_2$ | 65.0 | 63.0 | 66.0 | 66.0 | 70.0 | 64.0 | 60.0 |
| $Al_2O_3$ | 13.0 | 12.0 | 11.0 | 10.0 | 9.0 | 14.0 | 18.0 |
| $P_2O_5$ | 0.5 | / | / | / | / | 1.0 | / |
| $B_2O_3$ | / | / | / | / | / | / | 0.5 |
| $Y_2O_3$ | 3.0 | 2.0 | 2.0 | 4.0 | 3.0 | 6.0 | 2.0 |
| $La_2O_3$ | / | 1.0 | 0.5 | / | 1.0 | / | 1.0 |
| MgO | 1.0 | 4.0 | 3.5 | 3.0 | 2.5 | 2.0 | 4.0 |
| ZnO | / | / | 1.0 | / | / | / | / |
| $ZrO_2$ | 2.0 | 2.0 | / | / | / | / | 1.0 |
| $Na_2O$ | 5.0 | 7.0 | 6.0 | 5.0 | 4.5 | 3.0 | 4.0 |
| $Li_2O$ | 9.0 | 9.0 | 10.0 | 12.0 | 10.0 | 10.0 | 8.5 |
| $K_2O$ | / | / | / | / | / | / | 1.0 |
| SrO | 1.5 | / | / | / | / | / | / |
| G | 1389 | 1430 | 1351 | 1448 | 1373 | 1551 | 1488 |
| $Na_2O \times (3Y_2O_3 + Al_2O_3)$ | 110 | 126 | 102 | 110 | 81 | 96 | 96 |
| $Li_2O + Na_2O + K_2O$ | 14.0 | 16.0 | 16.0 | 17.0 | 14.5 | 13.0 | 13.5 |
| $Li_2O/(Na_2O + K_2O)$ | 1.8 | 1.3 | 1.7 | 2.4 | 2.2 | 3.3 | 1.7 |
| M | 19.35 | 13.13 | 14.28 | 19.71 | 17.33 | 33.94 | 21.27 |
| Young's Modulus before Strengthening (GPa) | 91.0 | 93.0 | 91.4 | 95.5 | 92.4 | 96.2 | 93.7 |
| Vickers Hardness (before strengthening) kgf/mm$^2$ | 633 | 640 | 634 | 654 | 641 | 669 | 636 |
| Vickers Hardness (after strengthening) kgf/mm$^2$ | 681 | 686 | 683 | 702 | 690 | 707 | 685 |
| Fracture Toughness before Strengthening (MPa·m$^{1/2}$) | 0.341 | 0.354 | 0.373 | 0.332 | 0.354 | 0.306 | 0.365 |
| Salt Bath and Temperature of First Strengthening | 100 wt% $NaNO_3$; 450 °C | 100 wt% $NaNO_3$; 450 °C | 100 wt% $NaNO_3$; 450 °C | 100 wt% $NaNO_3$; 450 °C | 100 wt% $NaNO_3$; 450 °C | 100 wt% $NaNO_3$; 450 °C | 100 wt% $NaNO_3$; 450 °C |
| Duration of First Strengthening | 5 h | 5 h | 5 h | 5 h | 5 h | 5 h | 5 h |
| Salt Bath and Temperature of Second Strengthening | 100 wt% $KNO_3$; 450 °C | 100 wt% $KNO_3$; 450 °C | 100 wt% $KNO_3$; 450 °C | 100 wt% $KNO_3$; 450 °C | 100 wt% $KNO_3$; 450 °C | 100 wt% $KNO_3$; 450 °C | 100 wt% $KNO_3$; 450 °C |
| Duration of Second Strengthening | 1 h 50 min | 2 h | 1 h 15 min | 2 h 10 min | 2 h | 2 h 30 min | 2 h 20 min |
| Surface CS (MPa) | 1227.8 | 1248.3 | 1267.5 | 1291.2 | 1101.4 | 1268.7 | 1220.5 |

(continued)

| Component (mol%) and Performance | Example 1 | Example 2 | Example 3 | Example 4 | Example 5 | Example 6 | Example 7 |
|---|---|---|---|---|---|---|---|
| DOL_1 ($\mu$m) | 4.9 | 5.2 | 5.1 | 5.7 | 6.1 | 5.9 | 5.4 |
| DOL_0 ($\mu$m) | 110.9 | 109.3 | 112.5 | 120.8 | 107.6 | 119.4 | 115.3 |
| CT_LD (MPa/mm) | 44218.8 | 44748.3 | 44998.8 | 45586.9 | 46511.8 | 48998.7 | 47184.5 |
| CT_LD$_{max}$ (MPa/mm) | 72500 | 66500 | 66300 | 89220 | 62100 | 81210 | 68800 |
| Bifurcation Threshold (MPa/mm) | 44500 | 44500 | 44000 | 45000 | 45100 | 48500 | 46700 |
| Surface CS/1000$\times$0.7+CT_L-D/40000$\times$0.3 | 1.19 | 1.21 | 1.22 | 1.25 | 1.12 | 1.26 | 1.21 |

TABLE 3

| Example No. | Weight Measurement 0 g | | Weight Measurement 50 g | | Weight Measurement 100 g | | Weight Measurement 150 g | | Weight Measurement 200 g | | Weight Measurement 250 g | |
|---|---|---|---|---|---|---|---|---|---|---|---|---|
| | Scratch Area/mm$^2$ | Optical Haze | Scratch Area/mm$^2$ | Optical Haze | Scratch Area/mm$^2$ | Optical Haze | Scratch Area/mm$^2$ | Optical Haze | Scratch Area/mm$^2$ | Optical Haze | Scratch Area/mm$^2$ | Optical Haze |
| Comparative Example 1 | 0.879 | 0.19 | 1.207 | 0.30 | 1.713 | 0.6 | 2.002 | 0.78 | 2.238 | 0.89 | 4.140 | 2.01 |
| Comparative Example 2 | 0.567 | 0.12 | 1.196 | 0.29 | 1.467 | 0.45 | 1.780 | 0.63 | 2.013 | 0.78 | 3.655 | 1.84 |
| Comparative Example 3 | 0.579 | 0.12 | 0.854 | 0.18 | 1.177 | 0.27 | 1.670 | 0.57 | 1.869 | 0.72 | 3.474 | 1.56 |
| Comparative Example 4 | 0.575 | 0.12 | 0.960 | 0.2 | 1.231 | 0.33 | 1.687 | 0.59 | 2.209 | 0.84 | 2.916 | 1.15 |
| Comparative Example 5 | 0.546 | 0.11 | 0.713 | 0.15 | 0.971 | 0.23 | 1.340 | 0.38 | 1.846 | 0.67 | 2.628 | 1.02 |
| Comparative Example 6 | 0.458 | 0.09 | 0.681 | 0.15 | 0.953 | 0.20 | 1.325 | 0.37 | 1.588 | 0.54 | 2.296 | 0.86 |
| Comparative Example 7 | 0.419 | 0.08 | 0.643 | 0.14 | 0.841 | 0.19 | 1.255 | 0.34 | 1.511 | 0.52 | 2.157 | 0.81 |
| Example 1 | 0.357 | 0.08 | 0.529 | 0.11 | 0.734 | 0.16 | 1.024 | 0.25 | 1.234 | 0.33 | 1.711 | 0.6 |
| Example 2 | 0.342 | 0.07 | 0.503 | 0.10 | 0.716 | 0.15 | 0.839 | 0.18 | 1.139 | 0.26 | 1.508 | 0.51 |
| Example 3 | 0.331 | 0.06 | 0.466 | 0.09 | 0.632 | 0.13 | 0.826 | 0.18 | 0.962 | 0.22 | 1.362 | 0.40 |

TABLE 4

| Weight Measurement Interval Corresponding to Increment | | 50 g-0 g | 100 g-50 g | 150 g-100 g | 200 g-150 g | 250 g-200 g |
|---|---|---|---|---|---|---|
| Ratio of Scratch Area Increment to Haze Increment | Example 1 | 5.729 | 4.099 | 3.220 | 2.624 | 1.768 |
| | Example 2 | 5.367 | 4.273 | 4.073 | 3.760 | 1.474 |
| | Example 3 | 4.507 | 4.137 | 3.876 | 3.402 | 2.224 |

It can be seen from TABLE 1, TABLE 2 and TABLE 3 that in the solutions of the examples of the present invention in which all of surface CS $\geq$900 MPa, (surface CS/1000)$\times$0.7+(CT_LD/40000)$\times$0.3>1.00, and Young's modulus >85 GPa are met, under the load of 50 g, the scratch area is less than 0.6 mm$^2$; under the load of 200 g, the scratch area is less than 1.5 mm$^2$; and the haze is also remarkably low, indicating that the chemically strengthened glass of the present invention has excellent scratching resistance, is less changed in the optical performance tehreof, and can meet use requirements. While the comparative examples failing to meet the above three conditions have remarkably larger scratch areas than that of the present invention under corresponding conditions, and remarkably high haze, and thus the optical performance is greatly affected.

Moreover, the solutions, in which the specific composition of the present invention is met and the contents of components satisfy certain relationships (for example, formulas of M and G), can enable the chemically strengthened glass to have the three stress structure characteristics in the preceding, and thus have excellent scratching resistance.

As can be seen from TABLE 3 and FIG. 1 to FIG. 10, compared with the solutions of the comparative examples, edge chipping situations of the solutions of the examples of the present invention are obviously reduced, and under a weight load of not more than 200 g, the scratch does not produce the phenomenon of edge chipping or an area of edge chipping produced by the scratch does not exceed 5% of a total area of the scratch. Moreover, in a case where the glass has obvious edge chipping, a haze value of the glass is obviously increased.

As can be seen from TABLE 4, the ratios of the scratch area increment to the haze increment as a whole present a decreasing trend. In conjunction with the researches of the inventors, with the increase in weight load, the possibility of producing edge chipping increases, resulting in an increase in the scratch area and an increase in the haze. The edge chipping affects the haze more than on the scratch area; therefore, the ratios of the scratch area increment to the haze increment present a reducing trend.

The above describe optional embodiments of the present invention in detail, but the present invention is not limited thereto. Within the scope of the technical concept of the present invention, various simple modifications can be made to the technical solutions of the present invention, including combining various technical features in any other suitable manner, and these simple modifications and combinations should also be considered as contents disclosed in the present invention and all fall within the scope of protection of the present invention.

**INDUSTRIAL APPLICABILITY**

The present invention provides chemically strengthened glass containing Y$_2$O$_3$ and use thereof. The chemically strengthened glass contains a compressive stress layer and a tensile stress layer, has a specific stress structure, excellent stress characteristic, high intrinsic strength and excellent scratching resistance, and can be widely applied in fields such as electronic products, with excellent practicability.

**Claims**

1.    A chemically strengthened glass containing Y$_2$O$_3$, wherein the chemically strengthened glass contains a compressive stress layer and a tensile stress layer, **characterized in that** the chemically strengthened glass satisfies:

$$\text{surface CS} \geq 900 \text{ MPa};$$

(surface CS/1000)$\times$0.7+(CT_LD/40000)$\times$0.3>1.00, wherein CT_LD is linear density of center tension, in MPa/mm; and
Young's modulus>85 GPa.

2.    The chemically strengthened glass according to claim 1, wherein when a surface of the chemically strengthened glass is scratched, under a load of 50 g, by a Mohs hardness pen with a hardness scale 8 secured at an angle of 45 °C through an automatic pencil hardness meter, so as to form a scratch with a length of 4.6 mm, an area of the scratch is less than 0.6 mm$^2$; and/or

when a surface of the chemically strengthened glass is scratched, under a load of 200 g, by the Mohs hardness pen with the hardness scale 8 secured at the angle of 45 °C through the automatic pencil hardness meter, so as to form a scratch with a length of 4.6 mm, an area of the scratch is less than 1.5 mm$^2$.

3. The chemically strengthened glass according to claim 1 or 2, wherein when a surface of the chemically strengthened glass is scratched, under a load not greater than 200 g, by a Mohs hardness pen with a hardness scale 8 secured at an angle of 45 °C through an automatic pencil hardness meter, so as to form a scratch with a length of 4.6 mm, the scratch does not produce a phenomenon of edge chipping, or an area of edge chipping produced by the scratch does not exceed 5% of a total area of the scratch.

4. The chemically strengthened glass according to any one of claims 1-3, wherein the surface CS of the chemically strengthened glass is ≥1,000 MPa, and preferably, the surface CS is 1,000 MPa-1,600 MPa.

5. The chemically strengthened glass according to any one of claims 1-4, wherein the chemically strengthened glass satisfies: 2.00≥(surface CS/1000)×0.7+(CT_LD/40000)×0.3>1.00.

6. The chemically strengthened glass according to any one of claims 1-5, wherein CT_LD of the chemically strengthened glass is ≥40,000 MPa/mm, and is preferably 40,000 MPa/mm-66,000 MPa/mm.

7. The chemically strengthened glass according to any one of claims 1-6, wherein the Young's modulus of the chemically strengthened glass is ≥90 GPa, and is preferably 90 GPa-110 GPa.

8. The chemically strengthened glass according to any one of claims 1-7, wherein the chemically strengthened glass further satisfies: 0<DOL_1≤0.014 t, and wherein t is a thickness of the chemically strengthened glass, and DOL_1 is a depth of the compressive stress layer formed through sodium-potassium exchange for any surface of the chemically strengthened glass;

and/or the chemically strengthened glass further satisfies: 0.14 t≤DOL_0≤0.25 t, wherein t is a thickness of the chemically strengthened glass, and DOL_0 is a depth of the compressive stress layer, in μm.

9. The chemically strengthened glass according to any one of claims 1-8, wherein Vickers hardness of the chemically strengthened glass is ≥650 kgf/mm$^2$, and is preferably 670 kgf/mm$^2$-750 kgf/mm$^2$.

10. The chemically strengthened glass according to any one of claims 1-9, wherein a bifurcation threshold of the chemically strengthened glass is 40,000 MPa/mm-60,000 MPa/mm, and CT_LD≤1.10×bifurcation threshold.

11. The chemically strengthened glass according to any one of claims 1-10, wherein in terms of molar percentages of oxides, the tensile stress layer of the chemically strengthened glass comprises following composition: $SiO_2$ in a content of 50.0%-80.0%, $Al_2O_3$ in a content of 3.0%-20.0%, $Y_2O_3$ in a content of 0.5%-10.0%, $La_2O_3$ in a content of 0-10.0%, MgO in a content of 0-15.0%, $Na_2O$ in a content of 1.0%-10.0%, and $Li_2O$ in a content of 1.0%-20.0%.

12. The chemically strengthened glass according to any one of claims 1-11, wherein in terms of molar percentages of oxides, the tensile stress layer of the chemically strengthened glass comprises following composition: $SiO_2$ in a content of 60.0%-70.0%, $Al_2O_3$ in a content of 8.0%-15.0%, $Y_2O_3$ in a content of 1.5%-6.0%, $La_2O_3$ in a content of 0%-2.0%, MgO in a content of 1.0%-7.5%, $Na_2O$ in a content of 3.0%-6.0%, and $Li_2O$ in a content of 8.0%-12.0%; and optionally, $ZrO_2$ in a content of 0-10%, $P_2O_5$ in a content of 0-8%, and SrO in a content of 0-10%.

13. The chemically strengthened glass according to claim 11 or 12, wherein the composition of the tensile stress layer of the chemically strengthened glass satisfies:
in terms of contents of oxides represented by molar percentage, calculating a value of G by following formula, G≥1250,
$G=SiO_2\times7.5+Al_2O_3\times24+B_2O_3\times2-P_2O_5\times6+MgO\times31.5+SrO\times20+Y_2O_3\times66+La_2O_3\times57+Na_2O\times10.8+Li_2O\times25+K_2O\times7+ZnO\times6.1+Zr O_2\times27$.

14. The chemically strengthened glass according to claim 11 or 12, wherein in terms of contents of oxides represented by molar percentage, the composition of the tensile stress layer of the chemically strengthened glass satisfies: $Na_2O\times(3Y_2O_3+Al_2O_3)>80$.

15. The chemically strengthened glass according to claim 11 or 12, wherein in terms of contents of oxides represented by molar percentage, the composition of the tensile stress layer of the chemically strengthened glass satisfies: $Li_2O+Na_2O+K_2O \leq 17.0$, and $Li_2O/(Na_2O+K_2O)>1$.

16. The chemically strengthened glass according to claim 11 or 12, wherein the composition of the tensile stress layer of the chemically strengthened glass satisfies:
in terms of contents of oxides represented by molar percentage, calculating a value of M calculated by following formula, $M \geq 12$,

$$M=Li_2O\times(1.4\times Y_2O_3+1.1\times La_2O_3+Al_2O_3)/(MgO\times0.3+Li_2O\times0.3+K_2O+Na_2O).$$

17. A substrate glass for preparing the chemically strengthened glass according to any one of claims 1-16, **characterized in that** in terms of molar percentages of oxides, the substrate glass comprises following composition: $SiO_2$ in a content of 50.0%-80.0%, $Al_2O_3$ in a content of 3.0%-20.0%, $Y_2O_3$ in a content of 0.5%-10.0%, $La_2O_3$ in a content of 0-10.0%, MgO in a content of 0-15.0%, $Na_2O$ in a content of 1.0%-10.0%, and $Li_2O$ in a content of 1.0%-20.0%;
in terms of contents of oxides represented by molar percentage, the composition of the substrate glass satisfies following conditions:
calculating a value of G based on following formula, $G \geq 1250$, $G=SiO_2\times7.5+Al_2O_3\times24+B_2O_3\times2-P_2O_5\times6+MgO\times31.5+SrO\times20+Y_2O_3\times66+La_2O_3\times57+Na_2O\times10.8+Li_2O\times25+K_2O\times7+ZnO\times6.1+Zr O_2\times27$; and

$$Na_2O\times(3Y_2O_3+Al_2O_3)>80.$$

18. The substrate glass according to claim 17, wherein in terms of molar percentages of oxides, the substrate glass comprises following composition: $SiO_2$ in a content of 60.0%-70.0%, $Al_2O_3$ in a content of 8.0%-15.0%, $Y_2O_3$ in a content of 1.5%-6.0%, $La_2O_3$ in a content of 0%-2.0%, MgO in a content of 1.0%-7.5%, $Na_2O$ in a content of 3.0%-6.0%, and $Li_2O$ in a content of 8.0%-12.0%.

19. The substrate glass according to claim 17 or 18, wherein in terms of contents of oxides represented by molar percentage, the composition of the substrate glass further satisfies following conditions:

$$Li_2O+Na_2O+K_2O \leq 17.0, \text{ and } Li_2O/(Na_2O+K_2O)>1;$$

and/or
calculating a value of M based on following formula, $M \geq 12$,

$$M=Li_2O\times(1.4\times Y_2O_3+1.1\times La_2O_3+Al_2O_3)/(MgO\times0.3+Li_2O\times0.3+K_2O+Na_2O).$$

20. The substrate glass according to any one of claims 17-19, wherein in terms of molar percentages of oxides, the substrate glass further comprises following composition: $ZrO_2$ in a content of 0-10%, $P_2O_5$ in a content of 0-8%, and SrO in a content of 0-10%.

21. The substrate glass according to any one of claims 17-20, wherein Young's modulus of the substrate glass is greater than 85 Gpa, and is preferably 90 GPa-110 GPa; and/or

Vickers hardness of the substrate glass is $\geq 620$ kgf/mm$^2$, and is preferably 630 kgf/mm$^2$-750 kgf/mm$^2$; and/or
a bifurcation threshold of the substrate glass is 40,000 MPa/mm-60,000 MPa/mm.

22. A glass device, **characterized in that** the glass device is made from the chemically strengthened glass according to any one of claims 1-16 or the substrate glass according to any one of claims 17-21.

23. An electronic apparatus, comprising a cover, **characterized in that** the cover comprises the chemically strengthened glass according to any one of claims 1-16.

24. The electronic apparatus according to claim 23, wherein the electronic apparatus comprises at least one of a mobile phone, a display device, a tablet computer, an electronic watch, a smart wearable, and a TV.

FIG. 1

FIG. 2

(a)         (b)         (c)

(d)         (e)         (f)

**FIG. 3**

(a)         (b)         (c)

(d)         (e)         (f)

**FIG. 4**

(a)           (b)           (c)

(d)           (e)           (f)

**FIG. 5**

(a)           (b)           (c)

(d)           (e)           (f)

**FIG. 6**

（a）　　　　　　　　　　（b）　　　　　　　　　　（c）

（d）　　　　　　　　　　（e）　　　　　　　　　　（f）

**FIG. 7**

（a）　　　　　　　　　　（b）　　　　　　　　　　（c）

（d）　　　　　　　　　　（e）　　　　　　　　　　（f）

**FIG. 8**

(a)  (b)  (c)

(d)  (e)  (f)

**FIG. 9**

(a)           (b)           (c)

(d)           (e)           (f)

**FIG. 10**

**FIG. 11**

## INTERNATIONAL SEARCH REPORT

| | International application No. |
|---|---|
| | **PCT/CN2023/105334** |

**A. CLASSIFICATION OF SUBJECT MATTER**

C03C21/00(2006.01)i

According to International Patent Classification (IPC) or to both national classification and IPC

**B. FIELDS SEARCHED**

Minimum documentation searched (classification system followed by classification symbols)

C03C10/12; C03C21/00; C03C10/00;

Documentation searched other than minimum documentation to the extent that such documents are included in the fields searched

Electronic data base consulted during the international search (name of data base and, where practicable, search terms used)

CNTXT, DWPI, ENTXTC, JPTXT, WPABSC, ISI web of knowledge, CNKI, 超星科技数字图书馆 CHAOXING Technology Digital Library: 玻璃, 分叉阈, 划痕, 化学, 钾, 钾盐, 交换, 面积, 钠, 钠盐, 强化, 维氏, 线密度, 压缩应力, 盐浴, 应力, 应力线密度, 硬度, 硬度笔, 张应力, 钇, CS, CT, Y2O3, Glass, Bifurcation Threshold, Scratch, Chemical, Potassium, Potassium, Exchange, Area, Sodium, Sodium Salt, Strengthening, Vickers, Linear Density, Compressive Stress, Salt Bath, Stress, Stress Line Density, Hardness, Hardness Pen, Tensile Stress

**C. DOCUMENTS CONSIDERED TO BE RELEVANT**

| Category* | Citation of document, with indication, where appropriate, of the relevant passages | Relevant to claim No. |
|---|---|---|
| X | CN 111087175 A (SHENZHEN DONGLIHUA TECHNOLOGY CO., LTD.) 01 May 2020 (2020-05-01) (claims 2 and 19, and description paragraphs 14, 130, and 171) | 1-24 |
| X | CN 110546115 A (AGC INC.) 06 December 2019 (2019-12-06) (claim 1) | 1-21 |
| Y | WO 2018199046 A1 (AGC INC.) 01 November 2018 (2018-11-01) (claims 1-2) | 11, 12 |
| Y | US 2020156994 A1 (AGC INC.) 21 May 2020 (2020-05-21) (claims 1-9) | 11, 12 |
| A | CN 112645589 A (CHONGQING XINJING SPECIAL GLASS CO., LTD.) 13 April 2021 (2021-04-13) (entire description) | 1-24 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 September 2023** | **07 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/105334**

**C.    DOCUMENTS CONSIDERED TO BE RELEVANT**

| Category* | Citation of document, with indication, where appropriate, of the relevant passages | Relevant to claim No. |
|---|---|---|
| A | WO 2022037334 A1 (CHONGQING AUREAVIA HI-TECH GLASS CO., LTD. et al.) 24 February 2022 (2022-02-24)<br>claims 8-20 | 1-24 |

Form PCT/ISA/210 (second sheet) (July 2022)

<table>
<tr><td colspan="2" align="center"><strong>INTERNATIONAL SEARCH REPORT</strong><br>Information on patent family members</td><td colspan="2">International application No.<br><strong>PCT/CN2023/105334</strong></td></tr>
</table>

| Patent document cited in search report | | | Publication date (day/month/year) | Patent family member(s) | | | Publication date (day/month/year) |
|---|---|---|---|---|---|---|---|
| CN | 111087175 | A | 01 May 2020 | EP | 4079697 | A1 | 26 October 2022 |
| | | | | US | 2023023010 | A1 | 26 January 2023 |
| | | | | KR | 20220117306 | A | 23 August 2022 |
| | | | | WO | 2021121165 | A1 | 24 June 2021 |
| CN | 110546115 | A | 06 December 2019 | WO | 2018199046 | A1 | 01 November 2018 |
| WO | 2018199046 | A1 | 01 November 2018 | CN | 110546115 | A | 06 December 2019 |
| | | | | CN | 115385571 | A | 25 November 2022 |
| US | 2020156994 | A1 | 21 May 2020 | US | 11718556 | B2 | 08 August 2023 |
| | | | | US | 2023250015 | A1 | 10 August 2023 |
| | | | | WO | 2019022033 | A1 | 31 January 2019 |
| | | | | CN | 110944954 | A | 31 March 2020 |
| CN | 112645589 | A | 13 April 2021 | | None | | |
| WO | 2022037334 | A1 | 24 February 2022 | CN | 114075046 | A | 22 February 2022 |
| | | | | CN | 114075046 | B | 24 January 2023 |

Form PCT/ISA/210 (patent family annex) (July 2022)

**REFERENCES CITED IN THE DESCRIPTION**

**Patent documents cited in the description**

- CN 202210887801